# EUROPÄISCHE PATENTSCHRIFT

(11) **EP 3 211 611 B1**
(45) Veröffentlichungstag und Bekanntmachung des Hinweises auf die Patenterteilung: **27.05.2026**
(21) Anmeldenummer: 16157106.2
(22) Anmeldetag: 24.02.2016
(51) Int. Cl.: G07G 3/00, A47F 9/04, G07G 1/00

(54) **VERFAHREN ZUM RECHNERGESTÜTZTEN LEER-ERKENNEN EINES TRANSPORTBEHÄLTERS UND VORRICHTUNG ZUM RECHNERGESTÜTZTEN LEER-ERKENNEN EINES TRANSPORTBEHÄLTERS**
METHOD FOR THE COMPUTER-ASSISTED DETECTION OF AN EMPTY TRANSPORT CONTAINER AND DEVICE FOR COMPUTER-ASSISTED DETECTION OF AN EMPTY TRANSPORT CONTAINER
PROCEDE DE DETECTION DE VIDE ASSISTEE PAR ORDINATEUR D'UN RECIPIENT DE TRANSPORT ET DISPOSITIF DE DETECTION DE VIDE ASSISTEE PAR ORDINATEUR D'UN RECIPIENT DE TRANSPORT

(43) Veröffentlichungstag der Anmeldung: 30.08.2017
(73) Patentinhaber: Diebold Nixdorf Systems GmbH, 33106 Paderborn (DE)
(72) Erfinder: SCHÄFER, Oliver, 10369 Berlin (DE); KIENECK, Daniel, 13585 Berlin (DE); SOMMER, Martin, 13467 Berlin (DE)

(56) Entgegenhaltungen:
- US-A1- 2008 226 129

## Beschreibung

Die Erfindung betrifft ein Verfahren zum rechnergestützten Leer-Erkennen eines Transportbehälters und eine Vorrichtung zum rechnergestützten Leer-Erkennen eines Transportbehälters.

Im Allgemeinen können Transportbehälter verwendet werden, um Gegenstände zu transportieren, z.B. Waren im Bereich der Produktion oder des Verkaufs. Dabei kann es nötig sein, zu erkennen, ob und gegebenenfalls was sich in dem Transportbehälter befindet, z.B. bei der Registrierung von Waren an einem Kassenausgang (dies kann auch als "Bottom of Basket" Erkennung bezeichnet werden - BoB). Damit können Kosten verringert werden, welche entstehen, wenn unregistrierte Waren unerkannt den Kassenausgang passieren (dies kann auch als Verlustprävention bezeichnet werden).

Herkömmlicherweise werden rechnergestützte Verfahren der Mustererkennung verwendet, um in dem Transportbehälter angeordnete Gegenstände zu identifizieren. Dabei werden markante Muster der Gegenstände erkannt und mit einer Datenbank abgeglichen, in welcher die Muster bekannter Gegenstände, z.B. Waren, gespeichert sind.

Der Abgleich der Muster von Gegenständen, die in dem Transportbehälter enthalten sind, mit der Datenbank und der Umfang der Datenbank kann einen erheblichen Aufwand erfordern, insbesondere wenn eine große Anzahl von Gegenständen in der Datenbank mit ihren jeweiligen Mustern gespeichert sind und/oder wenn einander ähnliche Gegenstände erkannt werden sollen. Beispielsweise kann es nötig sein, für jeden Gegenstand jeweils einen Datensatz gemäß verschiedener Ansichten des Gegenstands abzuspeichern, wenn z.B. nicht sichergestellt werden kann, dass der Gegenstand immer in derselben Orientierung vorliegt. Einander ähnliche Gegenstände können erfordern, dass eine größere Anzahl von Merkmalen abgeglichen wird, um eine zuverlässige Identifikation zu ermöglichen.

Mit steigendem Umfang der Datenbank, d.h. mit steigender Anzahl von Datensätzen und/oder steigender Anzahl von Einträgen pro Datensatz, können der benötigte Speicherbedarf und die benötigte Rechenleistung bzw. benötigte Datenanalysegeschwindigkeit steigen, um ein zeitlich effektives Erkennen der Gegenstände zu gewährleisten, z.B. in Echtzeit. Ferner können mit steigendem Umfang der Datenbank der Aufwand zur Pflege der Datensätze (Datenpflegebedarf) und damit das benötigte Personal zunehmen, um ein unkontrolliertes Anwachsen des Umfangs der Datenbank durch veraltete Datensätze zu verhindern. Daher können diese Systeme zur rechnergestützten Mustererkennung einen erheblichen Kostenaufwand in der Anschaffung und/oder in der Unterhaltung hervorrufen, insbesondere wenn z.B. je ein System pro Kassenausgang benötigt wird. Auch ist der Mustererkennungsprozess bei einer sehr hohen Anzahl zu unterscheidender Gegenstände sehr aufwändig und die Fehleranfälligkeit bei der Mustererkennung steigt ebenfalls mit steigender Anzahl einander ähnlicher Muster an.

Ferner kann eine herkömmliche Erkennung des Transportbehälterinhalts eingeschränkt und/oder ungenau sein, bei z.B. flachen Gegenständen (die z.B. in einer Orientierung einen geringen Querschnitt aufweisen); wenig oder nicht hervorgehobene und/oder farbige Gegenstände, z.B. mit nur geringem Informations-, Farb- und/oder Texturgehalt (beispielsweise ein nahezu homogenes Layout wie schwarz, weiß, grau, usw.); und/oder transparente Gegenstände. Ferner werden nicht in der Datenbank gespeicherte Gegenstände regelmäßig nicht erkannt oder falsch erkannt.

Die US 2008/226129 Al beschreibt ein Verfahren und eine Vorrichtung für eine Warenkorb-Prüfung, welche(s) eine Verdachtsstufe für eine verdächtige Transaktion erhöht, wenn ein Bildvergleich Unterschiede zwischen dem Videobild des Warenkorbs, welches während der Transaktion aufgenommen wird, und dem Videobild eines leeren Warenkorbs ergibt.

Die Erfindung stellt ein Verfahren und eine Vorrichtung zum rechnergestützten Leer-Erkennen eines Transportbehälters gemäß den unabhängigen Ansprüchen bereit.

Gemäß verschiedenen Ausführungsformen wird ein Verfahren zum rechnergestützten Leer-Erkennen eines Transportbehälters (d.h. anschaulich zum Erkennen, ob der Transportbehälter leer ist, anders ausgedrückt frei von in dem Transportbehälter enthaltenen Gegenständen ist) und eine Vorrichtung zum rechnergestützten Leer-Erkennen des Transportbehälters bereitgestellt, welche eine geringere Komplexität aufweisen, wodurch der Rechenaufwand und der Speicheraufwand reduziert werden können. Dies ermöglicht es einfacheres Equipment zu verwenden, so dass der Kostenaufwand bei der Anschaffung reduziert werden kann. Ferner kann der Umfang der Datenbank reduziert werden, so dass der Aufwand zum Unterhalt und zur Pflege der Datensätze reduziert werden kann, was zu einer Einsparung an Kosten führen kann.

Anschaulich werden gemäß verschiedenen Ausführungsformen ein Verfahren zum rechnergestützten Leer-Erkennen eines Transportbehälters und eine Vorrichtung zum rechnergestützten Leer-Erkennen des Transportbehälters bereitgestellt, welche Muster-Abweichungen eines oder mehreren Mustern, welche aus einem oder mehreren mittels beispielsweise einer Kamera aufgenommenen Bildern des (möglicherweise mit einem oder mehreren Gegenständen gefüllten) Transportbehälters von einem oder mehreren gespeicherten Mustern des Transportbehälter in Leer-Zustand (d.h. ohne Gegenstände in dem Transportbehälter) ermitteln.

Die Muster-Abweichungen werden beispielsweise durch Gegenstände in dem Transportbehälter hervorgerufen, d.h. sie entstehen oder werden größer, wenn der Transportbehälter beispielsweise in einem vorangegangenen Trainingsverfahren), eines oder mehrerer Referenz-Transportbehälter, welche(r) leer ist/sind, verglichen und anhand der Muster-Abweichungen wird entschieden, ob der zu untersuchende Transportbehälter leer ist oder nicht.

Gemäß verschiedenen Ausführungsformen ist es nicht mehr nötig eine Datenbank zu verwenden, in welcher jeder mögliche zu erkennende Gegenstand abgespeichert ist, sondern die Datenbank kann in ihrem Umfang auf den oder die verwendeten Transportbehälter reduziert werden. Somit steigt der Umfang der Datenbank nicht mehr mit der Anzahl und/oder Variation der Gegenstände an, welche mittels des Transportbehälters transportiert werden könnten und welche zu erkennen sind.

Gemäß verschiedenen Ausführungsformen werden ferner Tiefeninformationen mittels einer dreidimensionalen (3D) Bilderfassung gewonnen. Die Tiefeninformationen können beispielsweise verwendet werden, um zu erkennen, ob sich ein Gegenstand in verschiedenen Bereichen des Transportbehälters befindet, z.B. auf einer unteren und/oder oberen Ebene. Somit kann unterschieden werden, in welchem Bereich des Transportbehälters sich ein Gegenstand befindet. Beispielsweise können die Tiefeninformationen durch einen der Bereiche hindurch gewonnen werden, so dass anschaulich von oben erkannt werden kann, ob sich etwas in einem unteren Bereich des Transportbehälters oder in einem Bereich unterhalb des Transportbehälters befindet. Damit kann die Anzahl der benötigten Bilderfassungssensoren verringert werden, da der Transportbehälter aus ein und derselben Perspektive vollständig untersucht werden kann.

Gemäß verschiedenen Ausführungsformen wird ein System zur rechnergestützten Analyse von Gegenständen (Objekten) in einem (z.B. offenen) Transportbehälter (kann auch als Transport-Medium bezeichnet werden) bereitgestellt. Mittels des Systems wird es ermöglicht den Zustand des Transportbehälters (z.B. leer, oder nicht leer) zu einem bestimmten Zeitpunkt und/oder Ort, z.B. automatisiert, zu ermitteln.

Gemäß verschiedenen Ausführungsformen kann ein Verfahren zum rechnergestützten Leer-Erkennen eines Transportbehälters Folgendes aufweisen: Erfassen von Bilddaten eines Bereichs des Transportbehälters; Ermitteln eines Konturmusters (z.B. mittels einer Merkmalserkennung), welches den Transportbehälter repräsentiert (z.B. welches durch den Transportbehälter bewirkt wird), unter Verwendung der Bilddaten; Ermitteln einer Abweichungsgröße, welche eine Abweichung des Konturmusters von zumindest einem Referenzmuster repräsentiert, wobei das zumindest eine Referenzmuster einen leeren Transportbehälter repräsentiert; Ausgeben eines Signals, wenn die Abweichungsgröße einem vorgegebenen Kriterium genügt.

Gemäß verschiedenen Ausführungsformen kann das Verfahren ferner aufweisen: Erfassen von (z.B. zusätzlichen) Bilddaten eines zusätzlichen Bereichs des Transportbehälters; Ermitteln eines zusätzlichen Konturmusters, welches den zusätzlichen Bereich repräsentiert (z.B. welches durch den zusätzlichen Bereich bewirkt wird), auf Grundlage der (z.B. zusätzlichen) Bilddaten; wobei ein Referenzmuster des zumindest einen Referenzmusters das zusätzliche Konturmuster aufweist.

Gemäß verschiedenen Ausführungsformen kann das Verfahren ferner aufweisen: Abspeichern des zusätzlichen Konturmusters auf einen Datenspeicher.

Gemäß verschiedenen Ausführungsformen kann das zumindest eine Referenzmuster Teil einer Datenbank sein oder diese bilden.

Gemäß verschiedenen Ausführungsformen kann das zumindest eine Referenzmuster bzw. die Datenbank mehrere Referenzmuster aufweisen (z.B. zwei oder mehr als zwei, z.B. drei, vier, fünf, sechs, sieben, acht, neun, zehn oder mehr als zehn, z.B. zwanzig, fünfzig, z.B. hundert oder mehr als hundert).

Gemäß verschiedenen Ausführungsformen kann das Verfahren ferner aufweisen: Auslesen eines Referenzmusters des zumindest einen Referenzmusters von einem Datenspeicher (z.B. aus der Datenbank).

Gemäß verschiedenen Ausführungsformen kann der Transportbehälter zum Erfassen der Bilddaten in einem Bilderfassungsbereich angeordnet sein, wobei der Bilderfassungsbereich einen Bild-Hintergrund (anschaulich des Transportbehälters) definiert; wobei ein Referenzmuster des zumindest einen Referenzmusters ein Konturmuster aufweist, welches einen Bild-Hintergrund repräsentiert (z.B. wenn kein oder ein leerer Transportbehälter in dem Bilderfassungsbereich angeordnet ist). Anschaulich kann der Transportbehälter zwischen einem Bilderfassungssystem, mit dem die Bilddaten erfasst werden, und dem Bild-Hintergrund angeordnet sein.

Gemäß verschiedenen Ausführungsformen kann die Abweichungsgröße eine Kontrast-Abweichung des Konturmusters von dem zumindest einen Referenzmuster repräsentieren.

Gemäß verschiedenen Ausführungsformen kann die Abweichungsgröße eine Konturverlauf-Abweichung des Konturmusters von dem zumindest einen Referenzmuster in repräsentieren.

Gemäß verschiedenen Ausführungsformen kann die Abweichungsgröße eine Flächenbelegung-Abweichung des Konturmusters von dem zumindest einen Referenzmuster in repräsentieren.

Gemäß verschiedenen Ausführungsformen kann das Verfahren ferner aufweisen: Erkennen, wenn der Transportbehälter in einem Bilderfassungsbereich angeordnet ist, in dem das Erfassen der Bilddaten erfolgt; wobei das Erfassen der Bilddaten erfolgt, wenn erkannt wurde, dass der Transportbehälter in dem Bilderfassungsbereich angeordnet ist (z.B. während einer Suchphase).

Die Suchphase kann folgendes aufweisen: Erfassen von Reflektionen (z.B. im IR- Bereich); und Vergleichen (z.B. merkmalsbasiert) der Reflektionen dem Referenzmuster (z.B. mit den Merkmalen aus dem Referenzbild des Transportmediums).

Gemäß verschiedenen Ausführungsformen kann das Verfahren ferner aufweisen: Erkennen, ob der Transportbehälter in einem Bilderfassungsbereich angeordnet ist, in dem das Erfassen der Bilddaten erfolgt; Ausgeben eines weiteren Signals (kann auch als Nicht-Erkannt-Signal bezeichnet werden), wenn kein Transportbehälter in dem Bilderfassungsbereich angeordnet ist.

Gemäß verschiedenen Ausführungsformen kann das Verfahren ferner aufweisen: Erkennen, ob der Transportbehälter ein Behälter-Typ aus mehreren Behälter-Typen ist; und Ausgeben eines weiteren Signals (kann auch als Nicht-Erkannt-Signal bezeichnet werden), wenn kein Behälter-Typ der mehreren Behälter-Typen erkannt wurde.

Gemäß verschiedenen Ausführungsformen kann das vorgegebene Kriterium einen leeren Transportbehälter repräsentieren und das Signal ein Leer-Erkannt-Signal aufweisen.

Gemäß verschiedenen Ausführungsformen kann das vorgegebene Kriterium einen nicht-leeren Transportbehälter repräsentieren und das Signal ein Nicht-Leer-Erkannt-Signal aufweisen.

Gemäß verschiedenen Ausführungsformen kann das vorgegebene Kriterium einen Fehlerbereich repräsentieren, in welchem ein Leer-Erkennen unzuverlässig ist, und das Signal kann ein Fehler-Signal aufweisen oder darstellen.

Gemäß verschiedenen Ausführungsformen kann das Ausgeben des Signals aufweisen, eine Eingabeaufforderung auszugeben, wobei ein Kassensystem-Prozess in einen Warte-Zustand übergeht, bis eine Eingabe auf die Eingabeaufforderung erfolgt.

Gemäß verschiedenen Ausführungsformen kann das Ausgeben des Signals aufweisen, eine Eingabeaufforderung auszugeben, wobei das Verfahren ferner aufweist: Aktualisieren des zumindest einen Referenzmusters auf Grundlage des Konturmusters, wenn eine Eingabe auf die Eingabeaufforderung einen Leer-Zustand des Transportbehälters repräsentiert.

Gemäß verschiedenen Ausführungsformen kann das Ausgeben des Signals aufweisen, eine Eingabeaufforderung auszugeben, wobei das Verfahren ferner aufweist: Bilden eines zusätzlichen Referenzmusters auf Grundlage des Konturmusters, wenn eine Eingabe auf die Eingabeaufforderung einen Leer-Zustand des Transportbehälters repräsentiert; und Hinzufügen des zusätzlichen Referenzmuster zu dem zumindest einen Referenzmuster (z.B. zu der Datenbank).

Gemäß verschiedenen Ausführungsformen kann das Erfassen der Bilddaten des Transportbehälters Folgendes aufweisen: Erfassen von Bilddaten eines Bilderfassungsbereichs, in dem der Transportbehälter angeordnet ist; Ermitteln eines Teils der Bilddaten des Bilderfassungsbereichs (kann auch als "region of interest" - ROI oder Analysebereich bezeichnet werden), welcher die Bilddaten des Bereichs des Transportbehälters aufweist.

Gemäß verschiedenen Ausführungsformen das Ermitteln eines Teils der Bilddaten unter Verwendung eines oder mehrerer Marker des Transportbehälters erfolgen. Anschaulich kann ein Marker oder können mehrerer Marker verwendet werden, um mittels darauf angepasster Erkennungsalgorithmen die Eingrenzung der ROI zu ermöglichen.

Gemäß verschiedenen Ausführungsformen kann der Transportbehälter einen oder mehrere Marker aufweisen (z.B. Grauwertmarker (z.B.: ArUco) und/oder Reflexionsmarker).

Gemäß verschiedenen Ausführungsformen kann das Erfassen der Bilddaten des Transportbehälters Folgendes aufweisen: Erfassen von Bilddaten eines Bilderfassungsbereichs, in dem der Transportbehälter angeordnet ist; wobei das Ermitteln des Konturmusters Folgendes aufweist: Ermitteln eines Teils der Bilddaten des Bilderfassungsbereichs, welcher einen Bild-Hintergrund repräsentiert, der von dem Bilderfassungsbereich definiert wird; Vergleichen des Teils der Bilddaten mit Referenz-Bilddaten, wobei die Referenz-Bilddaten einen leeren Bilderfassungsbereich repräsentieren (kann auch als Bild-Hintergrund-Vergleich bezeichnet werden). Anschaulich kann das Konturmusters ermittelt werden, indem ermitteln wird, welcher Teil des Bild-Hintergrunds von dem Transportbehälter (z.B. einer Gitterstruktur) verdeckt wird.

Gemäß verschiedenen Ausführungsformen kann das Ermitteln des Konturmusters Folgendes aufweisen: Ermitteln eines Teils der Bilddaten (z.B. einen Interessebereich), welcher eine vorgegebene Konturdichte aufweist, Ermitteln des Konturmusters unter Verwendung des Teils der Bilddaten, welcher die vorgegebene Konturdichte aufweist. Anschaulich kann eine merkmalsintensive Region des Transportbehälters zum Leer-Erkennen herangezogen werden.

Gemäß verschiedenen Ausführungsformen kann das Erfassen der Bilddaten Folgendes aufweisen: nacheinander Erfassen einer Vielzahl von Bilddaten; und Ermitteln von Bilddaten der Vielzahl von Bilddaten, welche den Transportbehälter repräsentieren und/oder welche eine vorgegebene Konturdichte aufweisen. Anschaulich kann eine Serienaufnahme erfolgen, wobei die Bilder zum Leer-Erkennen herangezogen werden, welche den Transportbehälter zeigen. Damit kann ein Leer-Erkennen erleichtert werden, wenn der Transportbehälter nicht in dem Bilderfassungsbereich verbleibt und/oder nicht immer gleich in dem Bilderfassungsbereich positioniert wird.

Gemäß verschiedenen Ausführungsformen kann das Erfassen der Bilddaten des Transportbehälters Folgendes aufweisen: Erfassen von Bilddaten eines Bilderfassungsbereichs in dem der Transportbehälter angeordnet ist; Ermitteln einer räumlichen Lage (Position und/oder Ausrichtung) des Transportbehälters relativ zu dem Bilderfassungsbereich; Ermitteln eines Teil der Bilddaten (z.B. einen Interessebereich) des Bilderfassungsbereichs, welcher die Bilddaten des Bereichs aufweist auf Grundlage der räumlichen Lage (Position und/oder Ausrichtung).

Gemäß verschiedenen Ausführungsformen kann das Verfahren ferner aufweisen: Erkennen eines Behälter-Typs des Transportbehälters, wobei der Transportbehälters ein Behälter-Typ aus mehreren Behälter-Typen ist; und wobei das Referenzmuster einen leeren Transportbehälter des Behälter-Typs repräsentiert.

Gemäß verschiedenen Ausführungsformen kann das Verfahren ferner aufweisen: Auswählen des Referenzmusters aus einer Vielzahl von Referenzmustern, von denen jedes Referenzmuster einem Behälter-Typ der mehreren Behälter-Typen zugeordnet ist.

Gemäß verschiedenen Ausführungsformen kann das Verfahren ferner aufweisen: Erkennen eines Behälter-Typs des Transportbehälters, wobei der Transportbehälter ein Behälter-Typ aus mehreren Behälter-Typen ist; wobei das Kriterium den Behälter-Typ repräsentiert.

Gemäß verschiedenen Ausführungsformen kann das Verfahren ferner aufweisen: Auswählen des Kriteriums aus einer Vielzahl von Kriterien, von denen jedes Kriterium einem Behälter-Typ der mehreren Behälter-Typen zugeordnet ist.

Gemäß verschiedenen Ausführungsformen kann das Verfahren ferner aufweisen: Ermitteln von Farbinformationen (z.B. des Transportbehälters) auf Grundlage der Bilddaten; wobei die Abweichungsgröße ferner eine Abweichung der Farbinformationen von Referenz-Farbinformationen repräsentiert, wobei die Referenz-Farbinformationen einen leeren Transportbehälter repräsentieren.

Gemäß verschiedenen Ausführungsformen kann das Ermitteln der Abweichungsgröße Folgendes aufweisen: Gewichten der Abweichung der Farbinformationen und der Abweichung des Konturmusters gemäß einer vorgegebenen Gewichtcharakteristik.

Gemäß verschiedenen Ausführungsformen kann das Verfahren ferner aufweisen: Ermitteln von Topografieinformationen (z.B. des Transportbehälters) auf Grundlage der Bilddaten; wobei die Abweichungsgröße ferner eine Abweichung der Topografieinformationen von Referenz-Topografieinformationen repräsentiert, wobei die Referenz-Topografieinformationen einen leeren Transportbehälter repräsentieren.

Gemäß verschiedenen Ausführungsformen kann das Ermitteln der Abweichungsgröße Folgendes aufweisen: Gewichten der Abweichung der Topografieinformationen und der Abweichung des Konturmusters gemäß einer vorgegebenen Gewichtcharakteristik.

Gemäß verschiedenen Ausführungsformen kann das Verfahren ferner aufweisen: Ermitteln von Tiefeninformationen auf Grundlage der Bilddaten; wobei die Abweichungsgröße ferner eine Abweichung der Tiefeninformationen von Referenz-Tiefeninformationen repräsentiert, wobei die Referenz-Tiefeninformationen einen leeren Transportbehälter repräsentieren.

Gemäß verschiedenen Ausführungsformen kann das Ermitteln der Abweichungsgröße Folgendes aufweisen: Gewichten der Abweichung der Tiefeninformationen und der Abweichung des Konturmusters gemäß einer vorgegebenen Gewichtcharakteristik.

Gemäß verschiedenen Ausführungsformen kann das Ermitteln der Tiefeninformationen aufweisen, Bildinformationen eines zusätzlichen Bereichs des Transportbehälters durch den Bereich hindurch und/oder durch ein Flächenelement des Transportbehälters (welches z.B. zwischen dem ersten Bereich und dem zweiten Bereich angeordnet ist) hindurch zu erfassen.

Gemäß verschiedenen Ausführungsformen kann das Verfahren ferner aufweisen: Ermitteln eines ersten Teils der Bilddaten des Transportbehälters, welcher ein erstes Flächenelement des Transportbehälters repräsentiert; und Ermitteln eines zweiten Teils der Bilddaten des Transportbehälters, welcher ein zweites Flächenelement des Transportbehälters repräsentiert, wobei das erste Flächenelement und das zweite Flächenelement in einem Winkel zueinander verlaufen und/oder in einem Abstand voneinander angeordnet sind; wobei der zweite Teil der Bilddaten durch das erste Flächenelement hindurch erfasst wird; und wobei das Konturmuster das erste Flächenelement und/oder das zweite Flächenelement repräsentiert. Anschaulich kann gemäß verschiedenen Ausführungsformen unterschieden werden, welcher Bereich des Transportbehälters untersucht wird, z.B. indem das Flächenelement erkannt wird, welches die Bereiche voneinander trennt, und/oder z.B. indem die Flächenelemente erkannt werden, welche die Bereiche begrenzen.

Gemäß verschiedenen Ausführungsformen kann das Konturmuster zumindest eines von Folgenden repräsentieren: ein Konturmuster des Bild-Hintergrunds (z.B. ein Konturmuster der Bodenstruktur und/oder der Bildhintergrund-Struktur); eine Gitterstruktur des Transportbehälters und/oder eines Flächenelements des Transportbehälters; eine oder mehrere Verstrebungen des Transportbehälters und/oder eines Flächenelements des Transportbehälters; einen Werbeträger des Transportbehälters und/oder eines Flächenelements des Transportbehälters; eine Störung, welche von einem Gegenstand bewirkt wird, wenn der Gegenstand in dem Transportbehälter angeordnet ist; und/oder einen Bild-Hintergrund, welche von einem Bilderfassungsbereich definiert wird, in dem das Erfassen der Bilddaten erfolgt.

Gemäß verschiedenen Ausführungsformen kann der Transportbehälter ein Einkaufswagen (z.B. einen Kompakt-Einkaufswagen) oder ein Einkaufskorb sein.

Gemäß verschiedenen Ausführungsformen kann der Transportbehälter einen ersten Bereich (z.B. einen ersten Transportbereich) und einen zweiten Bereich (z.B. einen zweiten Transportbereich) aufweisen, wobei der erste Bereich und der zweite Bereich von zumindest einem Flächenelement des Transportbehälters voneinander getrennt sind.

Gemäß verschiedenen Ausführungsformen kann ein Flächenelement zumindest eines von Folgendem aufweisen: eine Gitterstruktur; eine oder mehrere Verstrebungen; und/oder einen Werbeträger.

Gemäß verschiedenen Ausführungsformen kann der Transportbehälter ein Fahrgestell aufweisen. Das Fahrgestell kann zumindest drei, z.B. zumindest vier, Räder (z.B. selbstlenkende Castor-Rädern) aufweisen.

Das Fahrgestell kann gemäß verschiedenen Ausführungsformen zwei Translationsfreiheitsgrade bereitstellen und optional einen Rotationsfreiheitsgrad, entlang deren der Transportbehälter beweglich ist.

Gemäß verschiedenen Ausführungsformen können ein erster Translationsfreiheitsgrad der zwei Translationsfreiheitsgrade und ein zweiter Translationsfreiheitsgrad der zwei Translationsfreiheitsgrade unterschiedlich zueinander sein, z.B. senkrecht zueinander stehen. Die zwei Translationsfreiheitsgrade können beispielsweise entlang einer von dem Untergrund definierten Fläche verlaufen, z.B. horizontal.

Gemäß verschiedenen Ausführungsformen kann der Transportbehälter Kunststoff und/oder ein Metall aufweisen, z.B. Aluminium und/oder Stahl.

Gemäß verschiedenen Ausführungsformen kann der zweite Bereich zwischen dem ersten Bereich und dem Fahrgestell angeordnet sein.

Gemäß verschiedenen Ausführungsformen kann der erste Bereich ein schwenkbares Flächenelement aufweisen, welches derart eingerichtet ist, dass zumindest zwei Transportbehälter ineinander geschoben werden können.

Gemäß verschiedenen Ausführungsformen kann der Transportbehälter eine Griffleiste und/oder einen Henkel aufweisen. Der Henkel kann beispielsweise schwenkbar gelagert sein.

Gemäß verschiedenen Ausführungsformen kann der Transportbehälter auf einer ersten Seite eine Öffnung aufweisen und auf einer der ersten Seite gegenüberliegenden zweiten Seite ein Flächenelement (z.B. anschaulich ein Boden oder eine Seitenwand) aufweisen, wobei eine Querschnittsfläche des Flächenelements kleiner ist als eine dazu parallele Querschnittsfläche der Öffnung, so dass das Flächenelement in die Öffnung hinein passt. Anschaulich können mehrere Transportbehälter zum Ineinanderstecken eingerichtet sein.

Gemäß verschiedenen Ausführungsformen kann eine Vorrichtung zum rechnergestützten Leer-Erkennen eines Transportbehälters Folgendes aufweisen: ein optisches Bilderfassungssystem zum Erfassen von Bilddaten; einen Datenspeicher, zum Abspeichern zumindest eines Referenzmuster und/oder in welchem zumindest ein Referenzmuster abgespeichert ist, wobei das Referenzmuster einen leeren Transportbehälter repräsentiert; einen Prozessor, welcher eingerichtet ist, folgendes Verfahren durchzuführen: Erfassen von Bilddaten eines Bereichs des Transportbehälters; Ermitteln eines Konturmusters, welches den Transportbehälter repräsentiert (z.B. welches durch den Transportbehälter bewirkt wird), unter Verwendung der Bilddaten; Ermitteln einer Abweichungsgröße, welche eine Abweichung des Konturmusters von zumindest einem Referenzmuster repräsentiert, wobei das zumindest eine Referenzmuster einen leeren Transportbehälter repräsentiert; Ausgeben eines Signals, wenn die Abweichungsgröße einem vorgegebenen Kriterium genügt.

Gemäß verschiedenen Ausführungsformen kann das optische Bilderfassungssystem einen Bilderfassungsbereich definieren, in dem das Erfassen von Bilddaten erfolgt; wobei der Transportbehälter zum Erfassen der Bilddaten in dem Bilderfassungsbereich angeordnet ist oder wird, wobei der Bilderfassungsbereich einen Bild-Hintergrund des Transportbehälters definiert; und wobei ein Referenzmuster des zumindest einen Referenzmusters ein Konturmuster des Bild-Hintergrunds aufweist (z.B. wenn kein und/oder ein leerer Transportbehälter in dem Bilderfassungsbereich angeordnet ist).

Der Prozessor kann ferner eingerichtet sein, eines der hierin beschriebenen Verfahren durchzuführen, z.B. wie vorangehend beschrieben ist.

Gemäß verschiedenen Ausführungsformen kann das Bilderfassungssystem zumindest zwei (optische) Bilderfassungssensoren (z.B. mittels einer oder zwei Kameras bereitgestellt) zum Erfassen von Tiefeninformationen aufweisen (z.B. stereoskopisch). Zum Ermitteln der Tiefeninformationen können die Bilddaten, welche mittels zweier Bilderfassungssensoren erfasst werden, einander überlagert werden, z.B. unter Berücksichtigung einer relativen räumlichen Lage (Position und/oder Ausrichtung) der zwei Bilderfassungssensoren zueinander.

Alternativ oder zusätzlich kann das Bilderfassungssystem zumindest eine plenoptische Kamera (kann auch als Lichtfeldkamera bezeichnet werden) zum Erfassen von Tiefeninformationen aufweisen.

Alternativ oder zusätzlich kann das Bilderfassungssystem einen Projektor aufweisen, welcher eingerichtet ist ein optisches Muster in den Bilderfassungsbereich zu projizieren, und einen Bilderfassungssensor aufweisen, welcher eingerichtet ist, das optische Muster zum Erfassen von Tiefeninformationen, zu erfassen.

Eine Kamera kann einen (optischen) Bilderfassungssensor aufweisen und zumindest eine dem Bilderfassungssensor zugeordnete Linsenanordnung. Die Linsenanordnung einer plenoptischen Kamera kann ein Gitter aus mehreren Mikrolinsen aufweisen.

Ein Bilderfassungssensor (kann auch als Bildsensor oder optischer Sensor bezeichnet werden) kann einen mehrere photoelektrisch aktive Bereiche (kann auch als Pixel bezeichnet werden) aufweisen, welche z.B. in Antwort auf eine elektromagnetische Strahlung (z.B. Licht, z.B. sichtbares Licht) ein elektrisches Signal erzeugen und/oder modifizieren. Der Bilderfassungssensor kann beispielsweise ein CCD-Sensor (charge-coupled device Sensor) und/oder einen aktiven Pixelsensor (kann auch als CMOS-Sensor bezeichnet werden) aufweisen oder daraus gebildet sein.

Gemäß verschiedenen Ausführungsformen kann ein Bilderfassungssensor wellenlängensensitiv eingerichtet sein (z.B. zum Erfassen von Farbinformationen und/oder zum Erfassen eines in den Bilderfassungsbereich projizierten Musters).

Gemäß verschiedenen Ausführungsformen kann der Prozessor eingerichtet sein, zum Ermitteln der Abweichungsgröße eine Kontrast-Abweichung des Konturmusters zu ermitteln.

Gemäß verschiedenen Ausführungsformen kann der Prozessor eingerichtet sein zum Ermitteln der Abweichungsgröße eine Flächenbelegung-Abweichung des Konturmusters zu ermitteln.

Gemäß verschiedenen Ausführungsformen kann der Prozessor eingerichtet sein zum Ermitteln der Abweichungsgröße eine Konturverlauf-Abweichung des Konturmusters zu ermitteln.

Gemäß verschiedenen Ausführungsformen kann der Datenspeicher ein nichtflüchtiger Datenspeicher sein. Der Datenspeicher kann beispielsweise eine Festplatte und/oder zumindest einen Halbleiterspeicher (wie z.B. Nur-Lese-Speicher, Direktzugriffsspeicher und/oder Flash-Speicher) aufweisen oder daraus gebildet sein. Der Nur-Lese-Speicher kann beispielsweise ein löschbarer programmierbarer Nur-Lese-Speicher (kann auch als EPROM bezeichnet werden) sein. Der Direktzugriffsspeicher kann ein nichtflüchtiger Direktzugriffsspeicher (kann auch als NVRAM -"non-volatile random access memory" bezeichnet werden) sein.

Gemäß verschiedenen Ausführungsformen kann die Vorrichtung ferner ein (z.B. digitales) Kassensystem aufweisen, welches eingerichtet ist, einen oder mehrere Kassensystem-Prozesse durchzuführen. Ein Kassensystem-Prozess kann beispielsweise ein Berechnungsprozess, ein Inventarprozess und/oder ein Registrierprozess sein.

Das Kassensystem kann zumindest eines von Folgendem aufweisen: einen Bildschirm (kann auch als primärer Bildschirm bezeichnet sein, z.B. einen berührungsempfindlichen Bildschirm), einen Drucker (z.B. zum Ausdrucken einer Rechnung und/oder eines Etiketts), einen Scanner (z.B. einen Barcodescanner) zum Registrieren von Gegenständen, eine Kassenschublade, eine (z.B. programmierbare) Kassentastatur (kann auch Teil des berührungsempfindlich Bildschirms sein), ein Elektronisch-Zahlungsmittel Terminal (kann auch als EC-Terminal bezeichnet werden, "EC" - electronic cash, z.B. zum Auslesen einer Debitkarte und/oder einer Kreditkarte), und/oder einen zusätzlichen Bildschirm (kann auch als sekundärer Bildschirm bezeichnet werden, z.B. einen Kundenmonitor), eine Signalausgabe (kann auch Teil des Bildschirms sein), einen Bedienerplatz (in dem ein das Kassensystem bedienender Benutzer angeordnet sein kann).

Auf dem primären Bildschirm können Informationen angezeigt werden, welche einen Zustand eines Kassen-Prozesses repräsentieren. Auf dem sekundären Bildschirm kann ein Teil der Informationen, welche auf dem primären Bildschirm angezeigt werden, angezeigt werden.

Gemäß verschiedenen Ausführungsformen kann das Signal mittels der Signalausgabe ausgegeben werden, z.B. indem eine Eingabeaufforderung mittels des Bildschirms ausgegeben wird und/oder z.B. indem ein akustisches Signal mittels einer akustischen Signalausgabe ausgegeben wird.

Die Eingabeaufforderung kann beispielsweise derart ausgegeben werden, dass ein Fortführen des Registrierprozesses nur möglich ist, wenn eine Eingabe auf die Eingabeaufforderung erfolgt ist.

Gemäß verschiedenen Ausführungsformen kann in dem Datenspeicher eine Datenbank (kann auch als Referenzdatenbank bezeichnet werden) gespeichert werden, welche ein oder mehrere Datensätze aufweist. Jeder Datensatz kann ein Referenzmuster aufweisen. Ferner kann jeder Datensatz zumindest eine von folgenden Informationen aufweisen: Referenz-Tiefeninformationen; Referenz-Topografieinformationen; Referenz-Farbinformationen; eine räumliche Lage (z.B. Position und/oder Ausrichtung eines Transportbehälters), welche dem Referenzmuster zugeordnet ist; eine Gewichtcharakteristik; und/oder einen Transportbehälter-Typ, welcher dem Referenzmuster zugeordnet ist.

Alternativ kann das Erkennen und/oder Erfassen unter Verwendung eines Algorithmus erfolgen, welcher invariant gegenüber einer Translation und/oder einer Rotation ist. Beispielsweise kann ein Algorithmus zur schnellen und robusten Erkennung von Bildmerkmalen verwendet werden, ein so genannter "robuste Merkmalerkennung-Algorithmus" (SURF - Speeded Up Robust Features - Algorithmus). Der zur merkmalsbasierten Erkennung verwendete Algorithmus kann beispielsweise rotationsinvariant sein, so dass die Erkennung des Transportbehälters unabhängig von dessen Ausrichtung erfolgen kann. Dann kann auf Informationen zur räumlichen Lage des Transportbehälters verzichtet werden.

Gemäß verschiedenen Ausführungsformen kann das Bilderfassungssystem derart ausgerichtet sein, dass der Bilderfassungsbereich (bzw. der Bild-Hintergrund) einen Untergrund (z.B. einen Hallenboden) aufweist.

Gemäß verschiedenen Ausführungsformen kann ein Verfahren zum rechnergestützten Leer-Erkennen eines Transportbehälters Folgendes aufweisen: Erfassen von Bilddaten eines Bilderfassungsbereichs, in welchem ein Transportbehälter angeordnet ist, wobei der Bilderfassungsbereich einen Bild-Hintergrund definiert; Ermitteln eines Konturmusters, welches den Transportbehälter und/oder den Bild-Hintergrund repräsentiert, unter Verwendung der Bilddaten; Ermitteln einer Abweichungsgröße, welche zumindest eine Abweichung des Konturmusters von zumindest einem Referenzmuster repräsentiert, wobei das zumindest eine Referenzmuster einen leeren Transportbehälter repräsentiert; Ausgeben eines Signals, wenn die Abweichungsgröße einem vorgegebenen Kriterium genügt. Anschaulich kann ermittelt werden, ob eine Kontur des Bild-Hintergrunds und/oder des Transportbehälters von einem Gegenstand verdeckt und/oder gestört wird.

Die Topografieinformationen können beispielsweise ein dreidimensionales Profil (z.B. eine Fläche im Ortsraum) repräsentieren. Auf Grundlage der Tiefeninformationen kann beispielsweise eine räumliche Lage (z.B. Position, Ausrichtung und/oder Abstand zu einem Referenzpunkt) im Ortsraum ermittelt werden. Auf Grundlage der Farbinformationen kann beispielsweise ein Farbhistogramm und/oder Farbspektrum ermittelt werden. Die Abweichungsgröße kann beispielsweise eine Abweichung des dreidimensionalen Profils, der räumlichen Lage, des Farbspektrums und/oder des Farbhistogramms von entsprechenden Referenzdaten repräsentieren.

Gemäß verschiedenen Ausführungsformen kann das Kriterium einen Schwellwert repräsentieren. Das Leer-Erkannt-Signal kann beispielsweise ausgegeben werden, wenn die Abweichungsgröße keiner ist als der Schwellwert. Das Nicht-Leer-Erkannt-Signal kann beispielsweise ausgegeben werden, wenn die Abweichungsgröße größer ist als der Schwellwert.

Ausführungsbeispiele der Erfindung sind in den Figuren dargestellt und werden im Folgenden näher erläutert.

Es zeigen
- Figur 1: ein Verfahren gemäß verschiedenen Ausführungsformen in einem schematischen Ablaufdiagram;
- Figur 2: eine Vorrichtung gemäß verschiedenen Ausführungsformen in einer schematischen Ansicht;
- Figur 3: eine Vorrichtung gemäß verschiedenen Ausführungsformen in einer schematischen Perspektivansicht;
- Figur 4: einen Transportbehälter gemäß verschiedenen Ausführungsformen in einer schematischen Seitenansicht oder Querschnittsansicht;
- Figur 5: einen Transportbehälter gemäß verschiedenen Ausführungsformen in einer schematischen Seitenansicht oder Querschnittsansicht;
- Figur 6: ein Verfahren gemäß verschiedenen Ausführungsformen in einem schematischen Ablaufdiagram;
- Figur 7: ein Verfahren gemäß verschiedenen Ausführungsformen in einem schematischen Ablaufdiagram;
- Figur 8: ein Verfahren gemäß verschiedenen Ausführungsformen in einem schematischen Ablaufdiagram;
- Figur 9: eine Vorrichtung gemäß verschiedenen Ausführungsformen in einer schematischen Perspektivansicht;
- Figur 10: eine Vorrichtung gemäß verschiedenen Ausführungsformen in einer schematischen Perspektivansicht;
- Figur 11: ein Bilderfassungssystem gemäß verschiedenen Ausführungsformen in einer schematischen Perspektivansicht;
- Figur 12: ein Verfahren gemäß verschiedenen Ausführungsformen in einer schematischen Ansicht;
- Figur 13: ein Verfahren gemäß verschiedenen Ausführungsformen in einer schematischen Ansicht;
- Figur 14: ein Verfahren gemäß verschiedenen Ausführungsformen in einer schematischen Ansicht;
- Figur 15: ein Verfahren gemäß verschiedenen Ausführungsformen in einer schematischen Ansicht;
- Figur 16: ein Verfahren gemäß verschiedenen Ausführungsformen in einer schematischen Ansicht;
- Figur 17: ein Verfahren gemäß verschiedenen Ausführungsformen in einer schematischen Ansicht;
- Figur 18: ein Verfahren gemäß verschiedenen Ausführungsformen in einer schematischen Ansicht;
- Figur 19: ein Verfahren gemäß verschiedenen Ausführungsformen in einer schematischen Ansicht;
- Figur 20: ein Verfahren gemäß verschiedenen Ausführungsformen in einer schematischen Ansicht; und
- Figuren 21 bis 37: jeweils ein Verfahren gemäß verschiedenen Ausführungsformen in einer schematischen Ansicht.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann der Transportbehälter einen Einkaufswagen, einen Einkaufskorb oder einen anderen Wagen (und/oder Korb) aufweisen oder daraus gebildet sein.

Gemäß verschiedenen Ausführungsformen kann eine Erkennung von verbliebenen Gegenständen im Inneren des Transportbehälters, z.B. auf einer unteren Kastenablage des Einkaufswagens, ermöglicht werden.

Gemäß verschiedenen Ausführungsformen kann gegenüber herkömmlicher Mustererkennung ein Erkennen, ob oder ob nicht einer der folgenden Gegenstände (z.B. Waren, kann auch als Artikel bezeichnet werden) in dem Transportbehälter angeordnet ist, verbessert sein und/oder ermöglicht werden (welche z.B. über Farbhistogramme oder Tiefeninformation nicht zuverlässig bestimmt werden können): ein flacher Gegenstand (welcher z.B. eine 3D-Erfassung einschränken), ein kaum oder nicht hervorgehobener und/oder farbiger Gegenstand (z.B. mit nur geringem Informations-, Farb- und/oder Texturgehalt), ein einfarbiger und/oder homogener Gegenstand (beispielsweise nahezu homogenes Layout wie schwarz, weiß, grau, usw.), ein transparenter Gegenstand.

Das Erkennen des Gegenstands kann gemäß verschiedenen Ausführungsformen darauf basieren, dass der Gegenstand das Konturmuster (z.B. eine Gitterkontur) des Transportbehälters und/oder des Bild-Hintergrunds stört (oder unterbrechen) und/oder einen Kontrast zum Transportbehälter und/oder zum Bild-Hintergrund (z.B. Untergrund und/oder Fußboden) bewirkt.

Gemäß verschiedenen Ausführungsformen wird ein rechnergestütztes Erkennen von Gegenständen in einem offenen Transportbehälter bereitgestellt. Damit kann der Zustand des Transportbehälters (Leer-Zustand, Nicht-Leer-Zustand und/oder Voll-Zustand) zu einem bestimmten Zeitpunkt und/oder Ort erkannt werden, z.B. automatisiert.

Gemäß verschiedenen Ausführungsformen kann ein Bilderfassungssystem (z.B.: Intel RealSense F200, INTEL R200 und/oder Intel SR300) einen 2D-Bilderfassungssensor und/oder einen 3D-Bilderfassungssensor aufweisen.

Der Prozessor kann mittels einer elektronischen (programmierbaren) Datenverarbeitungsanlage bereitgestellt sein oder werden. Die elektronische Datenverarbeitungsanlage kann ferner den Datenspeicher aufweisen. Beispielsweise kann die elektronische Datenverarbeitungsanlage einen Mikrocomputer aufweisen oder daraus gebildet sein, z.B. ein PC-System (Personal Computer-System) oder ein digitales Kassensystem (

Der Prozessor kann mittels einer USB-Schnittstelle (Universal Serial Bus Schnittstelle) mit dem Bilderfassungssystem gekoppelt sein, z.B. via USB 3.0.

Gemäß verschiedenen Ausführungsformen kann die Datenverarbeitungsanlage mindestens einen Co-Prozessor (z.B. mittels einer Co-Prozessorkarte oder externen Grafikkarte bereitgestellt) aufweisen, z.B. einen Grafikprozessor (GPU). Mittels des Co-Prozessors kann eine Beschleunigung der rechenintensiven Prozesse durch Auslagerung dieser in den Co-Prozessor erreicht werden.

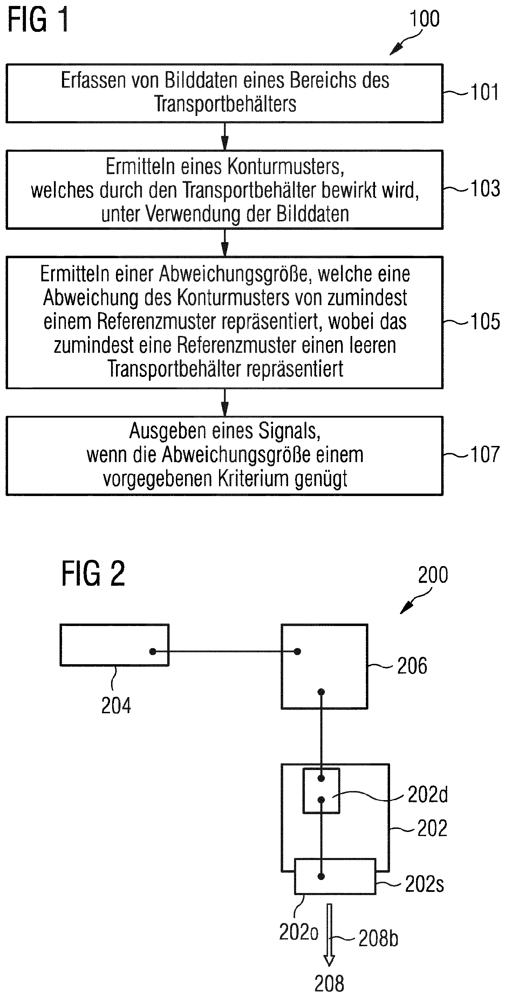

**Fig.1** veranschaulicht ein Verfahren 100 gemäß verschiedenen Ausführungsformen in einem schematischen Ablaufdiagram.

Gemäß verschiedenen Ausführungsformen kann das Verfahren 100 in 101 aufweisen: Erfassen von Bilddaten eines Bereichs des Transportbehälters. Das Verfahren 100 kann in 103 ferner aufweisen: Ermitteln eines Konturmusters, welches den Transportbehälter repräsentiert (z.B. welches durch den Transportbehälter bewirkt wird), unter Verwendung der Bilddaten. Das Verfahren 100 kann in 105 ferner aufweisen: Ermitteln einer Abweichungsgröße, welche eine Abweichung des Konturmusters von zumindest einem Referenzmuster repräsentiert, wobei das zumindest eine Referenzmuster einen leeren Transportbehälter repräsentiert. Das Verfahren 100 kann in 107 ferner aufweisen: Ausgeben eines Signals, wenn die Abweichungsgröße einem vorgegebenen Kriterium genügt.

**Fig.2** veranschaulicht eine Vorrichtung 200 gemäß verschiedenen Ausführungsformen in einer schematischen Ansicht.

Die Vorrichtung 200 kann ein optisches Bilderfassungssystem 202, einen Datenspeicher 204 und einen Prozessor 206 aufweisen. Der Prozessor 206 kann mit dem optischen Bilderfassungssystem 202 und dem Datenspeicher 204 gekoppelt sein, z.B. mittels einer Datenleitung (d.h. so dass zwischen diesen Daten übertragen werden können).

Beispielsweise kann der Prozessor 206 eingerichtet sein, mittels des optischen Bilderfassungssystems 202 Bilddaten zu erfassen. Beispielsweise kann der Prozessor 206 das Bilderfassungssystem 202 steuern.

Beispielsweise können die Bilddaten in einem Datenspeicher 202d (kann auch als Zwischenspeicher 202d bezeichnet werden) des Bilderfassungssystems 202 gespeichert werden. Die Bilddaten können mittels eines optischen Sensors 202s (kann auch als Bilderfassungssensor 202s bezeichnet werden) erfasst werden. Zumindest Verarbeiten der Bilddaten mittels des Prozessors 206, können diese aus dem Zwischenspeicher 202d ausgelesen werden.

Der optische Sensor 202s kann eine photoelektrisch aktive Oberfläche 202o aufweisen, welche zu einem Bilderfassungsbereich 208 hin gerichtet ist, z.B. in Richtung 208b (kann auch als Bilderfassungsrichtung 208b bezeichnet werden).

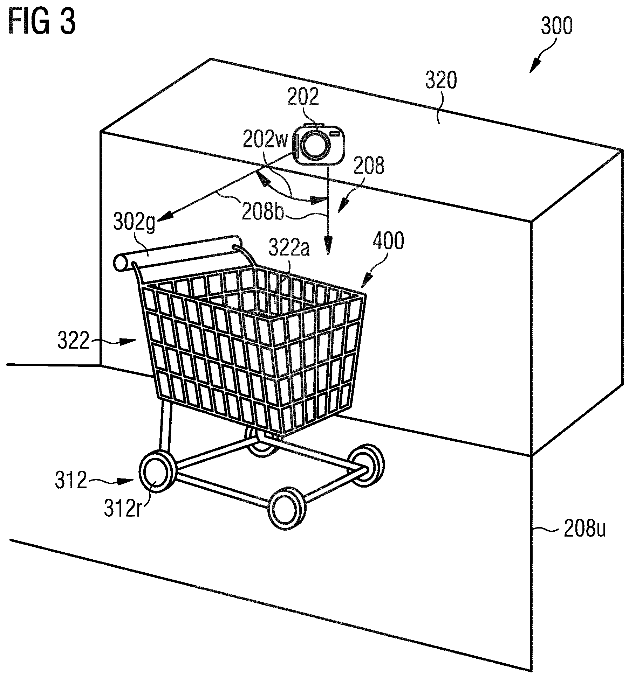

**Fig.3** veranschaulicht eine Vorrichtung 300 gemäß verschiedenen Ausführungsformen in einer schematischen Perspektivansicht.

Gemäß verschiedenen Ausführungsformen kann in dem Bilderfassungsbereich 208 ein Transportbehälter 400 angeordnet sein oder werden, z.B. ein Einkaufswagen, wie in Fig.3 veranschaulicht ist. Der Transportbehälter 400 kann ein Fahrgestell 312 mit mehreren drehbar gelagerten Rädern 312r und ein Transportgestell 322 aufweisen. Das Transportgestell 322 kann mittels des Fahrgestells 312 beweglich gelagert sein. Das Transportgestell 322 kann zumindest einen Transportbereich 322a bereitstellen.

Der Transportbehälter 400 kann einen Griff 302g aufweisen, mittels dessen der Transportbehälter 400 geführt werden kann, z.B. von einer Person. Der Transportbehälter 400 kann auf einem Untergrund 208u stehen und/oder bewegt werden. Der Untergrund 208u kann den Bilderfassungsbereich 208 begrenzen. Der Untergrund 208u kann z.B. den Bild-Hintergrund des Bilderfassungsbereichs 208 definieren.

Beispielsweise kann die Bilderfassungsrichtung 208b des Bilderfassungssensor 202s zu dem Untergrund 208u hin gerichtet sein. Die Bilderfassungsrichtung 208b kann optional zum Verändern der Bilderfassungsrichtung 208b eingerichtet sein, z.B. zum Verändern um mindestens einen Winkel 202w (z.B. einen Raumwinkel). Damit kann beispielsweise die Bilderfassungsrichtung 208b angepasst sein oder werden, z.B. auf Grundlage der Bilddaten und/oder eines Erkennens einer Lage des Transportbehälters in dem Bilderfassungsbereich 208. Anschaulich kann beispielsweise die Bilderfassungsrichtung 208b einem sich bewegenden Transportbehälter 400 nachgeführt werden und/oder an einen nicht präzise positionierten Transportbehälter 400 angepasst werden.

Alternativ oder zusätzlich kann der Winkel 202w einen Bilderfassungswinkel 202w (kann auch als Blickwinkel bezeichnet werden) definieren. Als Bilderfassungswinkel 202w kann derjenige Winkel im Ortsraum verstanden werden, der durch die Ränder des Aufnahmeformats begrenzt wird. Beim üblichen rechteckigen Bildformat kann mit dem Bilderfassungswinkel 202w der zur Bilddiagonale gehörende Wert gemeint sein. Horizontaler und vertikaler Bilderfassungswinkel 202w können kleiner sein als der zur Bilddiagonale gehörende Wert.

Das Bilderfassungssystem 202 kann mittels eines Trägers 320 gehalten sein oder werden, z.B. mittels eines Kassentischs 320. Optional können auf dem Kassentisch 320 mehrere Elemente des Kassensystems angeordnet sein oder werden, z.B. Bildschirm, Drucker, Scanner und/oder ein Zahlungsmittel-Terminal.

Gemäß verschiedenen Ausführungsformen kann im Bilderfassungsbereich 208 (kann auch als Blickfeld der Kamera bezeichnet werden) der Transportbehälter 400 gesucht werden.

Zum Erfassen von Bilddaten (und dem Leer-Erkennen basierend darauf) des Transportbehälters 400 kann eine direkte Sichtverbindung zwischen dem Bilderfassungssystem 202 und dem Transportbehälter 400 bereitgestellt sein oder werden. Mit anderen Worten kann eine optische Erkennung von Gegenständen in dem Transportbehälter 400 erfolgen.

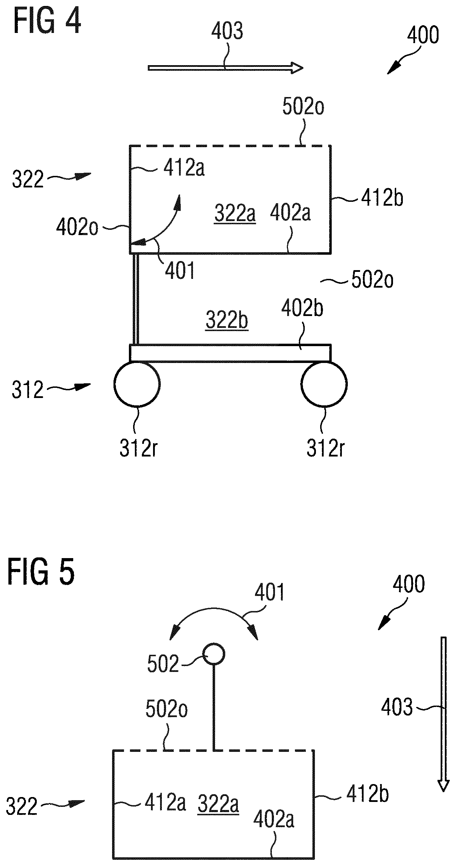

**Fig.4** veranschaulicht einen Transportbehälter 400 gemäß verschiedenen Ausführungsformen in einer schematischen Seitenansicht oder Querschnittsansicht, z.B. einen Transportbehälter 400 eines ersten Transportbehälter-Typs.

Das Transportgestell 322 kann mehrere Transportbereiche 322a, 322b (ein erster Transportbereich 322a und ein zweiter Transportbereich 322b) aufweisen, welche jeder zum Aufnehmen eines Gegenstands (welcher transportiert werden soll) eingerichtet sein kann. Beispielsweise kann jeder Transportbereich 322a, 322b mittels eines Auflage-Flächenelements 402a, 402b (z.B. ein Bodenelement) bereitgestellt und/oder begrenzt sein.

Das Transportgestell 322 kann mehrere Flächenelemente aufweisen, z.B. ein oder mehrere Auflage-Flächenelemente 402a, 402b (z.B. Bodenelemente 402a, 402b), ein oder mehrere Seiten-Flächenelemente 412a, 412b (z.B. Seitenelemente 412a, 412b). Jeder Transportbereich 322a, 322b kann von einem oder mehreren Flächenelementen begrenzt sein oder werden, z.B. von zumindest einem Auflage-Flächenelement 402a, 402b und optional von mehreren (bezüglich vier) Seiten-Flächenelementen 412a, 412b. Zumindest ein erstes Seiten-Flächenelement 412b kann schwenkbar 401 gelagert sein, z.B. zwischen einem Offen-Zustand und einem Geschlossen-Zustand. In einem Offen-Zustand kann eine Öffnung 402o gebildet sein, welche derart eingerichtet ist (Größe und Lage), dass ein zweites Seiten-Flächenelement 412b in die Öffnung 402o passt. Somit können mehrere Transportbehälter 400 ineinander geschoben werden, z.B. in Richtung 403.

Beispielsweise kann die Querschnittsfläche (z.B. quer zur Richtung 403 geschnitten) des ersten Transportbereichs 322a in die Richtung 403, welche von dem ersten Seiten-Flächenelement 412a zu dem zweiten Seiten-Flächenelement 412b zeigt, abnehmen.

In zumindest eine Richtung kann jeder Transportbereich 322a, 322b geöffnet 502o sein (d.h. eine Öffnung 502o aufweisen), so dass z.B. anschaulich ein Gegenstand durch die Öffnung 502o in den Transportbereich 322a, 322b gelangen kann.

Gemäß verschiedenen Ausführungsformen kann der Transportbehälter 400 ein Flächenelement (z.B. ein Auflage-Flächenelement 402a, 402b und/oder ein Seiten-Flächenelement 412a, 412b) aufweisen, welches mehrere Durchgangsöffnungen aufweist (z.B. ein Gitter oder ein Rost). Beispielsweise kann der Transportbehälter 400 eine nicht vollständig geschlossene Zwischenbodenfläche 402a aufweisen, um die Erkennung im zweiten Transportbereich 322b (anschaulich unterer Transportbereich 322b) aus einer vorgegebenen Perspektive (z.B. von oben), bei der die Zwischenbodenfläche 402a zwischen dem Bilderfassungssystem 202 und dem zweiten Transportbereich 322b angeordnet ist, zu ermöglichen.

Gemäß verschiedenen Ausführungsformen können ein erstes Auflage-Flächenelement 402a (kann auch als Zwischenbodenfläche 402a bezeichnet werden) und/oder eine zweites Auflage-Flächenelement 402b mehrere Durchgangsöffnungen aufweisen. Mit anderen Worten können das erste Auflage-Flächenelement 402a und/oder das zweite Auflage-Flächenelement 402b nicht blickdicht sein. Damit kann ermöglicht werden, dass durch das erste Auflage-Flächenelement 402a hindurch ermittelt werden kann, ob ein Gegenstand in dem zweiten Transportbereich 322b angeordnet ist, z.B. mittels Tiefeninformationen. Beispielsweise kann anhand der Tiefeninformationen ermittelt werden, dass bestimmte Merkmale dem ersten Auflage-Flächenelement 402a zugeordnet sind, und können zum Bilden des Konturmusters verworfen werden, wenn z.B. nur der zweite Transportbereich 322b untersucht werden soll.

Alternativ oder zusätzlich kann dadurch ermöglicht werden, dass durch das erste Auflage-Flächenelement 402a hindurch Konturen des zweiten Auflage-Flächenelements 402b und/oder des Bild-Hintergrunds 602h zum Bilden des Konturmusters verwendet werden können. Analog kann dadurch ermöglicht werden, dass durch das zweite Auflage-Flächenelement 402b hindurch Konturen des Bild-Hintergrunds zum Bilden des Konturmusters verwendet werden können. Damit kann ein Leer-Erkennen erleichtert sein oder werden (anschaulich da das Konturmusters mehr Merkmale aufweist).

Alternativ oder zusätzlich können die Seiten-Flächenelemente 412a, 412b (z.B. die, welche dem Bilderfassungssystem 202 zugewandt sind) mehrere Durchgangsöffnungen aufweisen. Dadurch kann ermöglicht werden, dass durch ein Seiten-Flächenelement 412a, 412b hindurch Konturen des ersten Auflage-Flächenelements 402b, des zweiten Auflage-Flächenelements 402b und/oder des Bild-Hintergrunds zum Bilden des Konturmusters verwendet werden können. Beispielsweise kann anhand der Tiefeninformationen ermittelt werden, dass bestimmte Merkmale einem Seiten-Flächenelement 412a, 412b zugeordnet sind, und können zum Bilden des Konturmusters verworfen werden.

Beispielsweise kann ein (nicht blickdichtes) Flächenelement 402a, 402b, 412a, 412b (z.B. metallische oder nichtmetallische) Gitterstruktur aufweisen oder daraus gebildet sein. Alternativ oder zusätzlich kann ein (nicht blickdichtes) Flächenelement 402a, 402b, 412a, 412b eine zusammenhängende (z.B. transparente oder teiltransparente) Fläche oder eine Kombinationen aus einer zusammenhängenden Flächen und einer Gitterstruktur (z.B. transparent und/oder semi-transparent) aufweisen oder daraus gebildet sein.

Es können mehrere Transportbehälter-Typen ein Fahrgestell 312 und ein Transportgestell 322 aufweisen. Beispielsweise können sich zwei Transportbehälter-Typen in zumindest einem von Folgendem unterschieden: einer Ausdehnung des ersten Bereichs 322a und/oder des zweiten Bereichs 322b, in dem Vorhandensein des ersten Bereichs 322a und/oder des zweiten Bereichs 322b.

**Fig.5** veranschaulicht einen Transportbehälter 400 gemäß verschiedenen Ausführungsformen in einer schematischen Seitenansicht oder Querschnittsansicht, z.B. einen Transportbehälter 400 eines zweiten Transportbehälter-Typs.

Der erste Transportbehälter-Typ kann sich von dem zweiten Transportbehälter-Typ in zumindest dem Vorhandensein eines Fahrgestells 312 unterscheiden.

Der Transportbehälter 400 kann einen geöffneten Transportbereich 322a (mit einer Öffnung 502o) aufweisen. Der Transportbereich 322a kann von einem Auflage-Flächenelement 402a und mehreren Seiten-Flächenelementen 412a, 412b begrenzt sein oder werden.

Gemäß verschiedenen Ausführungsformen kann die Querschnittsfläche (z.B. quer zur Richtung 403 geschnitten) des ersten Transportbereichs 322a in die Richtung 403, welche von der Öffnung 502o zu dem Auflage-Flächenelement 402a zeigt, abnehmen. Damit kann erreicht werden, dass mehrere Transportbehälter 400 ineinander gesteckt werden können, z.B. entlang Richtung 403, z.B. zum Stapeln der mehreren Transportbehälter 400.

Der Transportbehälter 400 kann einen Griff 502 aufweisen, welcher optional schwenkbar gelagert sein kann.

Analog zum vorangehend Beschriebenen können optional durch das Auflage-Flächenelement 402a hindurch Konturen des Bild-Hintergrunds erfasst und zum Bilden des Konturmusters verwendet werden, wenn dieses z.B. mehrere Durchgangsöffnung aufweist. Damit kann ein Leer-Erkennen erleichtert sein oder werden.

Analog zum vorangehend Beschriebenen können optional durch ein Seiten-Flächenelement 412a, 412b hindurch Konturen des Bild-Hintergrunds und/oder des Auflage-Flächenelements 402a erfasst und zum Bilden des Konturmusters verwendet werden, z.B. wenn dieses z.B. mehrere Durchgangsöffnung aufweist. Damit kann ein Leer-Erkennen erleichtert sein oder werden.

Es können mehrere Transportbehälter-Typen kein Fahrgestell 312 aufweisen. Beispielsweise können sich zwei Transportbehälter-Typen in zumindest einer Ausdehnung des Bereichs 322a unterscheiden (z.B. Höhe und/oder Breite).

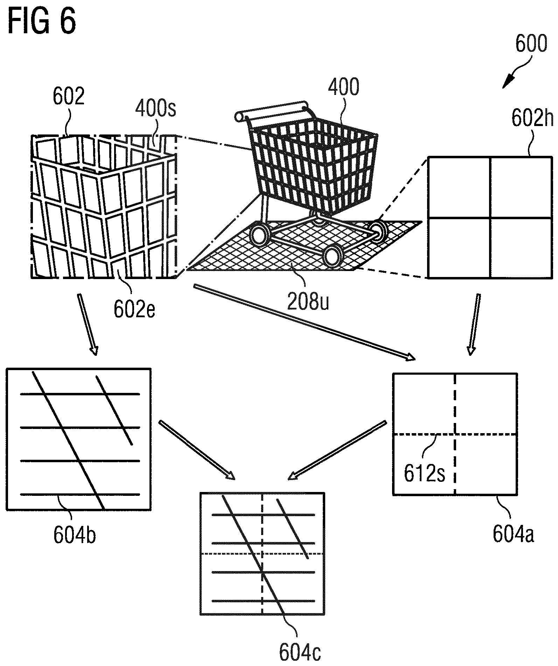

**Fig.6** veranschaulicht ein Verfahren 600 gemäß verschiedenen Ausführungsformen in einem schematischen Ablaufdiagram.

Gemäß verschiedenen Ausführungsformen können Bilddaten 602 eines Bereichs des Transportbehälters 400 erfasst 602e werden. Unter Verwendung der Bilddaten 602 kann ein Konturmuster 604a, 604b, 604c ermittelt werden, welches den Transportbehälter 400 repräsentiert.

Ein erstes Konturmuster 604a kann beispielsweise einen Bild-Hintergrund 602h des Bilderfassungsbereichs (z.B. den Untergrund 208u) repräsentieren, welcher aufgrund des Transportbehälters 400 gestört 612h wird. Anschaulich kann eine Struktur 400s (z.B. ein Gitter) des Transportbehälters 400 einen Teil des Bild-Hintergrunds 602h verdecken, so dass dessen Konturverlauf gestört 612, z.B. unterbrochen 612s, wird.

Alternativ kann ein zweites Konturmuster 604b beispielsweise die Struktur 400s (z.B. ein Gitter 400s) des Transportbehälters 400 repräsentieren.

Gemäß verschiedenen Ausführungsformen kann ein drittes Konturmuster 604c die Struktur 400s (z.B. ein Gitter) des Transportbehälters 400 und den Bild-Hintergrund 602h des Bilderfassungsbereichs 208 repräsentieren.

Ferner können das erste Konturmuster 604a, das zweite Konturmuster 604b und/oder das dritte Konturmuster 604c zum Ermitteln der Abweichungsgröße verwendet werden.

Das Konturmuster 604 (z.B. das Konturmuster 604a, das Konturmuster 604b und/oder das Konturmuster 604c) kann beispielsweise als Referenzmuster verwendet werden, wenn der Transportbehälter 400 leer ist. Anschaulich kann ein Referenz-Konturmuster angelernt werden.

Anschaulich können die optischen Merkmale des Transportbehälters 400 (wie z.B. ein Einkaufswagen) oder merkmalsintensiver Regionen dessen, und/oder des Untergrunds/Bild-Hintergrund initial angelernt werden. Die erkannten Merkmale können in einer Referenzdatenbank abgespeichert werden.

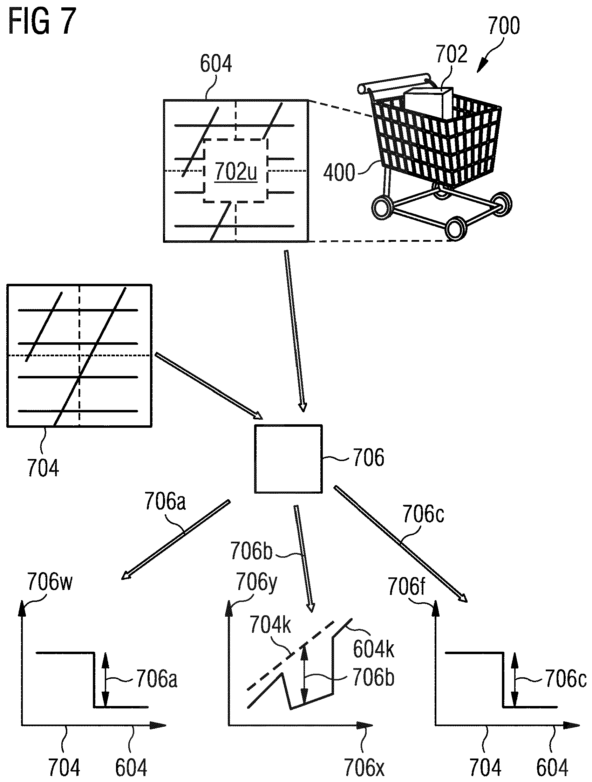

**Fig.7** veranschaulicht ein Verfahren 700 gemäß verschiedenen Ausführungsformen in einem schematischen Ablaufdiagram.

Gemäß verschiedenen Ausführungsformen kann ein ermitteltes Konturmuster 604 (z.B. das Konturmuster 604a, das Konturmuster 604b und/oder das Konturmuster 604c) eine Kontur aufweisen, welche einen Gegenstand 702 repräsentiert, wenn dieser in dem Transportbehälter 400 angeordnet ist. Anschaulich kann die Kontur des Transportbehälters 400 und/oder des Bild-Hintergrunds von dem Gegenstand 702 gestört, z.B. (zumindest teilweise) verdeckt, werden. Beispielsweise kann das Konturmuster 604 eine oder mehrere Störungen 702u (z.B. Unterbrechungen) aufweisen, welche von dem Gegenstand 702 bewirkt werden.

Das Konturmuster 604 kann mit einem Referenz-Konturmuster 704 (kann auch als Referenzmuster 704 bezeichnet werden) verglichen werden. Das Referenzmuster 704 kann den Bild-Hintergrund 602h des Bilderfassungsbereichs und/oder die Struktur 400s des Transportbehälters 400 repräsentieren, wenn der Transportbehälter 400 leer ist.

Auf Grundlage des Konturmusters 604 und des Referenzmusters 704 kann eine Abweichungsgröße 706 ermittelt werden, welche eine Abweichung des Konturmusters 604 von dem Referenzmuster 704 repräsentiert. Das Referenzmuster 704 kann ein Konturmuster des Bilderfassungsbereichs aufweisen, in dem kein oder ein leerer Transportbehälter 400 angeordnet ist (z.B. ein leerer Transportbehälter 400 vor dem Bild-Hintergrund 602h).

Die Abweichungsgröße 706 kann eine Kontrast-Abweichung 706a, eine Farb-Abweichung 706a, eine Konturverlauf-Abweichung 706b und/oder eine Flächenbelegung-Abweichung 706c repräsentieren. Die Kontrast-Abweichung 706a kann anschaulich angeben, wie stark eine Abweichung in einem Kontrast 706k zwischen dem Referenzmusters 704 und dem Konturmusters 604 ist. Die Konturverlauf-Abweichung 706b kann anschaulich angeben, wie stark eine Unterbrechung in einem Verlauf einer Kontur zwischen dem Referenzmusters 704 und dem Konturmusters 604 ist. Die Flächenbelegung-Abweichung 706c kann anschaulich angeben, wie stark eine Abweichung in einer Fläche ist, welche die Konturen des Referenzmusters 704 und des Konturmusters 604 jeweils belegen.

Die Kontrast-Abweichung 706a kann beispielsweise pixelweise ermittelt werden, z.B. durch Vergleich der Werte 706w (z.B. Kontrast-Werte 706w und/oder Helligkeitswerte 706w) von einander entsprechenden Pixeln des Referenzmusters 704 und des Konturmusters 604.

Alternativ oder zusätzlich zu der Kontrast-Abweichung 706a kann eine Farb-Abweichung 706a, beispielsweise pixelweise, ermittelt werden, z.B. durch Vergleich der Werte 706w (z.B. Farb-Werte 706w und/oder Helligkeitswerte 706w) von einander entsprechenden Pixeln des Referenzmusters 704 und des Konturmusters 604.

Für die Konturverlauf-Abweichung 706b kann beispielsweise einer Kontur 604k des Konturmusters 604 eine Referenz-Kontur 704k des Referenzmusters 704 zugeordnet werden und die (z.B. räumliche und/oder pixelweise) Abweichung 706 der Kontur 604k von der Referenz-Kontur 704k ermittelt werden. Die Abweichung 706 der Kontur 604k von der Referenz-Kontur 704k kann z.B. in einem Ortsraum und/oder einem Pixelraum ermittelt werden, welcher von zumindest zwei Koordinaten 706x, 706y (Ortskoordinaten und/oder Pixelkoordinaten) aufgespannt wird.

Die Flächenbelegung-Abweichung 706c kann beispielsweise durch einen Vergleich der Flächenbelegung 706f (z.B. Anzahl belegter Pixel und/oder belegter Anteil des Musters) des Referenzmusters 704 und des Konturmusters 604 ermittelt werden.

Die Abweichungsgröße 706 kann einen numerischen Wert (z.B. eine Flächenbelegung-Abweichung 706c, eine Kontrast-Abweichung 706a und/oder eine Farb-Abweichung), einen Vektor (z.B. eine Kontur-Abweichung, eine Tiefen-Abweichung, Ortskoordinaten und/oder Pixelkoordinaten) und/oder eine Matrix (z.B. eine Topografie-Abweichung) aufweisen.

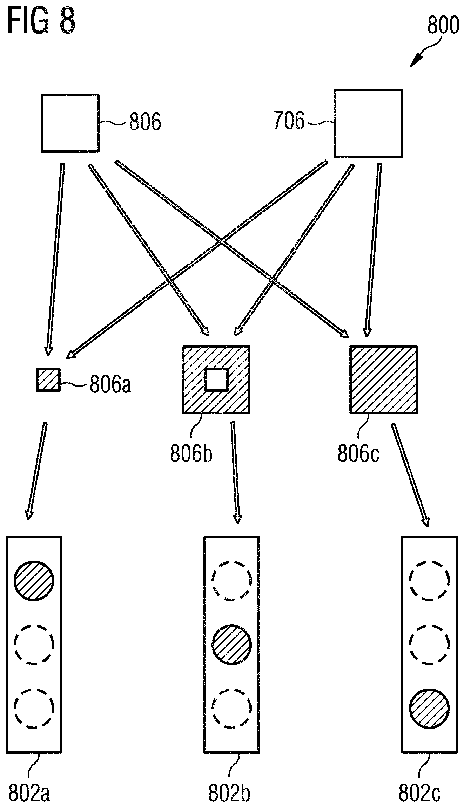

**Fig.8** veranschaulicht ein Verfahren 800 gemäß verschiedenen Ausführungsformen in einem schematischen Ablaufdiagram.

Gemäß verschiedenen Ausführungsformen kann die Abweichungsgröße 706 mit einem vorgegebenen Kriterium 806 verglichen werden. Ferner kann ein Signal ausgegeben werden, wenn die Abweichungsgröße 706 dem Kriterium 806 genügt. Das Signal kann beispielsweise eine visuelles Signal (z.B. ein farbiges Signal und/oder ein geometrisches Signal), eine Eingabeaufforderung und/oder ein akustisches Signal aufweisen oder daraus gebildet sein.

Das vorgegebene Kriterium 806 kann ein erstes Kriterium 806a (kann auch als Leer-Kriterium 806a bezeichnet werden) aufweisen, welches einen leeren Transportbehälter repräsentiert. Dann kann das Signal ein erstes Signal 802a (kann auch als Leer-Erkannt-Signal 802a bezeichnet werden) aufweisen, welches ein Leer-Erkennen repräsentiert. Anschaulich kann das erste Signal 802a beispielsweise ausgegeben werden, wenn die Abweichungsgröße 706 keiner ist als ein erster Schwellwert, der von dem ersten Kriterium 806a repräsentiert wird.

Das vorgegebene Kriterium 806 kann ein zweites Kriterium 806b (kann auch als Fehler-Kriterium 806b bezeichnet werden) aufweisen, welches einen Fehlerbereich repräsentiert. Dann kann das Signal ein zweites Signal 802b (kann auch als Fehler-Signal 802b bezeichnet werden) aufweisen, welches ein Fehler-Erkennen repräsentiert. Anschaulich kann das zweite Signal 802b beispielsweise ausgegeben werden, wenn die Abweichungsgröße 706 größer ist als der erste Schwellwert und keiner ist als ein zweiter Schwellwert, der von einem dritten Kriterium 806c repräsentiert wird.

Das vorgegebene Kriterium 806 kann das drittes Kriterium 806c (kann auch als Nicht-Leer-Kriterium 806c bezeichnet werden) aufweisen, welches einen nicht-leeren Transportbehälter repräsentiert. Dann kann das Signal ein drittes Signal 802c (kann auch als Nicht-Leer-Erkannt-Signal 802c bezeichnet werden) aufweisen, welches ein Nicht-Leer-Erkennen repräsentiert. Anschaulich kann das dritte Signal 802c ausgegeben werden, wenn die Abweichungsgröße 706 größer ist als der zweite Schwellwert, der von dem dritten Kriterium 806c repräsentiert wird.

Anschaulich kann der Fehlerbereich zwischen dem Leer-Kriterium 806a und dem Nicht-Leer-Kriterium 806c liegen und einen Bereich repräsentieren, in dem eine eindeutige Entscheidung, ob der Transportbehälter 400 leer ist oder nicht, nicht zuverlässig getroffen werden kann.

Im Fall eines Fehler-Erkennens kann das Verfahren 100 von vorn beginnen. Beispielsweise kann ein anderer Bereich des Transportbehälters 400 und/oder eine anderer Analysebereich zum Bilden des Konturmusters 604 verwendet werden.

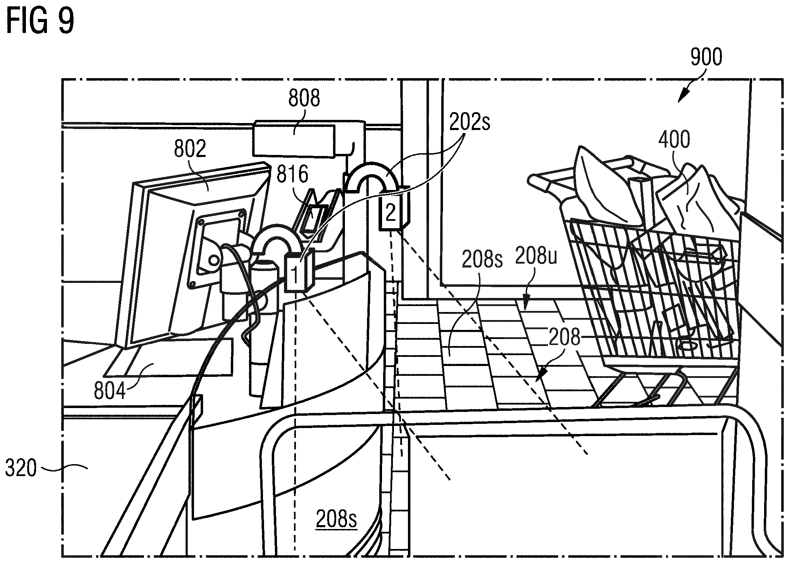

**Fig.9** veranschaulicht eine Vorrichtung 900 gemäß verschiedenen Ausführungsformen in einer schematischen Perspektivansicht.

Das Kassensystem kann einen primären Bildschirm 802, einen Barcodescanner 804, einen sekundären Bildschirm 808 und ein EC-Terminal 816 aufweisen. Der Bildschirm 802 kann zum Ausgeben des Signals eingerichtet sein. Beispielsweise kann auf dem Bildschirm ein farbiges Signal, ein geometrisches Signal und/oder eine Eingabeaufforderung angezeigt werden, welche einen Zustand des Transportbehälters 400 (hier außerhalb des Bilderfassungsbereichs 208 angeordnet) repräsentiert (z.B. leer oder nicht-leer) und/oder einen Zustand des Bilderfassungsbereichs 208 (z.B. mit oder ohne Transportbehälter 400).

Die Vorrichtung 900 kann ein Bilderfassungssystem 202 aufweisen, welches mehrere optische Sensoren 202s aufweist. Jeder Sensor 202s kann einen Erfassungsbereich 208s definieren, welche zusammen den Bilderfassungsbereich 208 definieren. Beispielsweise können sich die Erfassungsbereiche 208s zumindest zweier Sensoren 202s des Bilderfassungssystems 202 überlappen. Die veranschaulichten Montagepositionen können als exemplarisch verstanden werden. Die zwei Sensoren 202s können alternativ derart montiert sein oder werden, dass deren Erfassungsbereiche einen Abstand voneinander aufweisen oder aneinandergrenzen.

Der Untergrund 208u kann eine Kontur aufweisen, welche z.B. den Bodenbelag (z.B. dessen Fließen und/oder dessen Fugen) repräsentiert.

Gemäß verschiedenen Ausführungsformen kann in dem Bilderfassungsbereich 208 nach dem Transportbehälter 400 gesucht werden. Dabei kann erkannt werden, ob der Transportbehälter 400 ein Behälter-Typ aus mehreren (bekannten) Behälter-Typen ist, z.B. der erste Behälter-Typ oder der zweite Behälter-Typ. Alternativ oder zusätzlich kann erkannt werden, ob ein Transportbehälter 400 in dem Bilderfassungsbereich 208 angeordnet ist.

Ferner kann ein Signal (kann auch als Nicht-Erkannt-Signal bezeichnet werden) ausgegeben werden, wenn kein Behälter-Typ der mehreren Behälter-Typen erkannt wurde und/oder kein Transportbehälter 400 in dem Bilderfassungsbereich 208 erkannt wurde. Im Fall, dass kein Behälter-Typ der mehreren Behälter-Typen und/oder kein Transportbehälter 400 in dem Bilderfassungsbereich 208 erkannt wurde, kann ein Fehler-Erkennen sein. Dann kann das Nicht-Erkannt-Signal ein Fehler-Signal sein.

Im Fall eines Fehler-Erkennens kann das Verfahren 100 von vorn beginnen. Beispielsweise können Bilddaten aus einem anderen Bereich des Bilderfassungsbereichs 208 zum Bilden des Konturmusters 604 verwendet werden.

Gemäß verschiedenen Ausführungsformen kann das Signal (z.B. das Fehler-Signal) eine Eingabeaufforderung aufweisen, wobei ein Kassensystem-Prozess in einen Warte-Zustand übergeht, bis eine Eingabe auf die Eingabeaufforderung erfolgt. Damit kann ein Bediener (z.B. der Kassierer) angehalten werden, einen Zustand herzustellen (z.B. durch Verrücken des Transportbehälters 400), in dem der Transportbehälter 400 und/oder dessen Transportbehälter-Typ erkannt werden können. Somit können unregistrierte Artikel weiter verringert werden.

Wurde der Transportbehälter und/oder dessen Transportbehälter-Typ erkannt, kann das Konturmuster 604 ermittelt werden. Alternativ oder zusätzlich kann ein Referenzmuster ausgewählt werden, welches den Transportbehälter-Typ repräsentiert. Damit kann das Ermitteln der Abweichungsgröße genauer erfolgen bzw. kann ein Fehler-Erkennen reduziert werden. Anschaulich kann das Referenzmuster an den ermittelten Transportbehälter-Typ angepasst werden, so dass das Referenzmuster des erkannten Transportbehälter-Typs zum Ermitteln der Abweichungsgröße verwendet wird.

Optional kann das vorgegebene Kriterium auf Grundlage des erkannten Transportbehälter-Typs angepasst werden. Beispielsweise kann ein erstes Kriterium für den ersten Transportbehälter-Typ verwendet werden und ein zweites Kriterium kann für den zweiten Transportbehälter-Typ verwendet werden. Damit kann das Leer-Erkennen genauer erfolgen bzw. kann ein Fehler-Erkennen reduziert werden.

Der primäre Bildschirm 802 kann zum Anzeigen von Informationen eingerichtet sein, welche die oder den Artikel repräsentieren, die mittels des Barcodescanners 804 registriert wurden. Die registrierten Artikel können beispielsweise aufgelistet und zusammen mit Ihnen zugeordneten Informationen (z.B. Registrierinformation) auf dem primäre Bildschirm 802 angezeigt werden, z.B. mit Artikelnummer-Informationen, Artikelnamen-Informationen und/oder von Preis-Informationen.

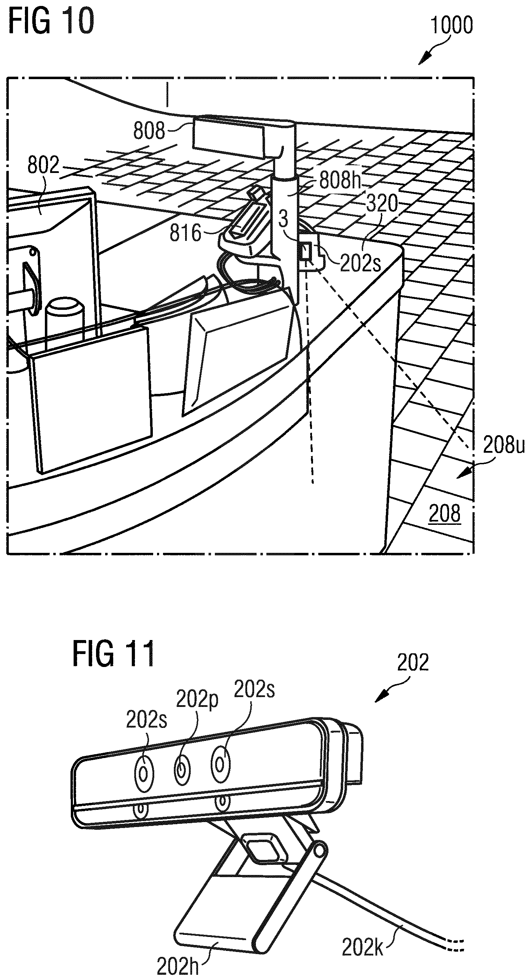

**Fig.10** veranschaulicht eine Vorrichtung 1000 gemäß verschiedenen Ausführungsformen in einer schematischen Perspektivansicht.

Gemäß verschiedenen Ausführungsformen kann zumindest ein optischer Sensor 202s an einem Halter 808h (z.B. einer Stange) befestigt sein oder werden, welche den sekundären Bildschirm 808 hält. Der sekundäre Bildschirm 808 kann anschaulich zum Anzeigen eines Teils der Informationen eingerichtet sein, welche mittels des primären Bildschirm 802 angezeigt werden, z.B. von Artikelnamen-Informationen und/oder von Preis-Informationen.

**Fig.11** veranschaulicht ein Bilderfassungssystem 202 gemäß verschiedenen Ausführungsformen in einer schematischen Perspektivansicht.

Das Bilderfassungssystem 202 kann mehrere (z.B. wie oder mehr als zwei) Bilderfassungssensoren 202s aufweisen. Das Bilderfassungssystem 202 kann eine Befestigungsstruktur aufweisen, an welcher das Bilderfassungssystem 202 befestigt werden kann. Ferner kann das Bilderfassungssystem 202 eine Datenleitung 202k aufweisen, mittels welcher das Bilderfassungssystem 202 z.B. mit dem Prozessor 206 gekoppelt werden kann.

Das Bilderfassungssystem 202 kann eingerichtet sein, Bilddaten zu erfassen, welche zweidimensionale (2D) Informationen repräsentieren, z.B. in einem Ortsraum. Optional kann das Bilderfassungssystem 202 eingerichtet sein Bilddaten zu erfassen, welche dreidimensionale (3D) Informationen (kann auch als Tiefeninformationen bezeichnet werden) repräsentieren, z.B. in einem Ortsraum.

Das Bilderfassungssystem 202 kann optional einen Laserprojektor 202p aufweisen, welcher eingerichtet ist, ein optisches Muster in den Bilderfassungsbereich 208 zu projizieren, z.B. mittels strukturiertem Laserlicht (d.h. in Form des Musters strukturiertes Licht). Mit anderen Worten kann der Laserprojektor 202p Licht gemäß des Musters (z.B. in Form eines Gitters) in den Bilderfassungsbereich 208 emittieren. Das emittierte Licht kann außerhalb des sichtbaren Lichts liegen, z.B. in einem infraroten (IR) Spektralbereich (mehr als ungefähr 780 nm). Alternativ oder zusätzlich können andere Spektralbereiche verwendet werden, z.B. auch im sichtbaren Bereich des Lichts (ungefähr 380 nm bis ungefähr 780 nm). Wird Licht von Fremdlichtquellen in den Bilderfassungsbereich emittiert, können Spektralbereiche verwendet werden, welche z.B. außerhalb des von den Fremdlichtquellen emittierten Lichts liegen. Zumindest ein Bilderfassungssensor 202s kann eingerichtet sein, den Spektralbereich des Laserprojektors 202p zu erfassen. Somit können Deformationen des Musters, welcher durch eine Topografie in dem Bilderfassungsbereichs und/oder eines Gegenstandes in dem Bilderfassungsbereich bewirkt werden, mittels des Bilderfassungssensors 202s erfasst werden (d.h. Topografieinformationen können ermittelt werden). Mit anderen Worten kann der Bilderfassungssensor 202s 3D-Bilddaten erfassen. Die 3D-Bilddaten können dann von dem Prozessor weiterverarbeitet werden. Auf Grundlage des in den Bilderfassungsbereich 208 projizierten optischen Musters können alternativ oder zusätzlich Tiefeninformationen gewonnen werden, z.B. indem eine Distanz des Bilderfassungssystems 202 zu Konturen, Gegenständen und/oder Strukturen im Bilderfassungsbereich ermittelt wird und/oder indem die Topografieinformationen ausgewertet werden.

Alternativ oder zusätzlich kann das Bilderfassungssystem 202 eingerichtet sein, mittels der zumindest zwei Bilderfassungssensoren 202s stereoskopische Bilddaten zu erfassen. Die Bilddaten können dann zwei einander zugeordnete Bilddatenteile aufweisen, welche zur selben Zeit aus unterschiedlichen Winkeln aufgenommen werden.

Die Bilddaten können mittels des Prozessors verarbeitet werden, und so z.B. die Distanz des Bilderfassungssystems 202 zu Konturen, Gegenständen und/oder Strukturen im Bilderfassungsbereich zu messen (d.h. Tiefeninformationen zu ermitteln).

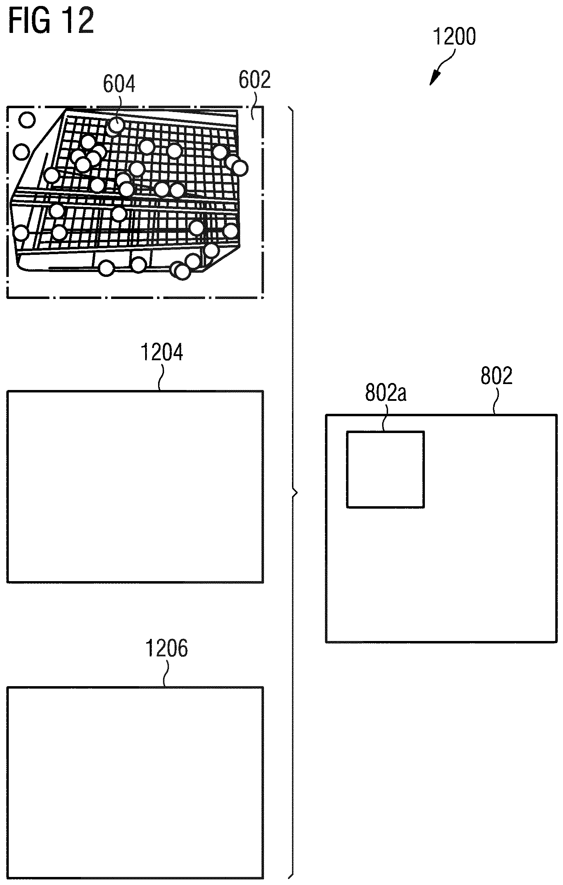

**Fig.12** veranschaulicht ein Verfahren 1200 gemäß verschiedenen Ausführungsformen in einer schematischen Ansicht.

In einem 2D-Modus kann zunächst erkannt werden, ob ein Transportbehälter 400 in dem Bilderfassungsbereich 208 angeordnet ist (d.h. ob ein Transportbehälter 400 anwesend ist). Beispielsweise kann das Erkennen mittels Erfassens von Reflektionen (auf Objekten), z.B. im IR-Bereich, erfolgen. Es kann erkannt werden, ob die Reflexionen von einem Transportbehälter stammen, z.B. von dessen Struktur und/oder von Markern. Die kann ermöglichen, das Erkennen schneller durchzuführen. Die Reflexionen können optional mit dem Referenzmuster verglichen werden. Dazu kann das Referenzmuster Referenz-Reflexionsdaten aufweisen.

Die Erkennung des Transportbehälters 400 kann auf Grundlage der Bilddaten 602 erfolgen. Beispielsweise können auf Grundlage der Bilddaten 602 eine Mustererkennung und/oder eine Konturerkennung erfolgen, welche mit der Datenbank abgeglichen wird. Die Konturerkennung kann beispielsweise lediglich ermitteln, ob oder ob nicht eine Kontur vorhanden ist.

Alternativ oder zusätzlich kann das Konturmuster 604 (in der Darstellung den Bilddaten überlagert) ermittelt werden, um zu erkennen, ob ein Transportbehälter 400 in dem Bilderfassungsbereich 208 angeordnet ist.

Ferner kann in dem 2D-Modus, z.B. wenn erkannt wurde, dass ein Transportbehälter 400 in dem Bilderfassungsbereich 208 angeordnet ist, auf Grundlage des Konturmusters 604 ermittelt werden, ob ein Gegenstand in dem Transportbehälter 400 angeordnet ist. Genügt eine Abweichung des Konturmusters 604 von dem Referenzmuster 704 dem Kriterium (z.B. stimmen alle Elemente des Konturmusters 604 mit den Elementen des Referenzmusters 704 überein) kann ein Leer-Erkannt-Signal 802a ausgegeben werden, beispielsweise auf dem primären Bildschirm 802. Das Leer-Erkannt-Signal 802a kann beispielsweise eine Information anzeigen, welche repräsentiert, dass der Transportbehälter 400 als leer erkannt wurde, z.B. ein Schriftzug und/oder eine Farbe (z.B. Grün).

Optional kann in dem 2D-Modus eine Abweichung der Farbinformationen 1204 verwendet werden, um die Abweichungsgröße zu ermitteln. Beispielsweise kann ermittelt werden, ob (und wenn wie viele) Pixel der Bilddaten 602 einen Farbwert aufweisen, der von den Referenz-Farbinformationen abweicht. Weist der Transportbehälter 400 beispielsweise nur Grautöne auf, kann ermittelt werden, ob die Bilddaten 602 Farbwerte aufweisen.

Alternativ oder zusätzlich kann in einem 3D-Modus ermittelt werden, ob (und wenn wie viele) Pixel der Bilddaten 602 einen Tiefenwert (z.B. einen Abstand zum Bilderfassungssystem 202) aufweisen, der von den Referenz-Tiefeninformationen abweicht. Optional kann auf Grundlage der Bilddaten 602 eine Topografie ermittelt werden, welche den Transportbehälter 400 (bzw. gegebenenfalls dessen Inhalt) repräsentiert.

Beispielsweise kann zunächst ein erster Transportbereich 322a in dem 2D-Modus überprüft werden und optional danach ein dahinter liegender zweiter Transportbereich 322b in einem 3D-Modus (d.h. der erste Transportbereich 322a ist zwischen dem zweiten Transportbereich 322b und dem Bilderfassungssystem 202 angeordnet).

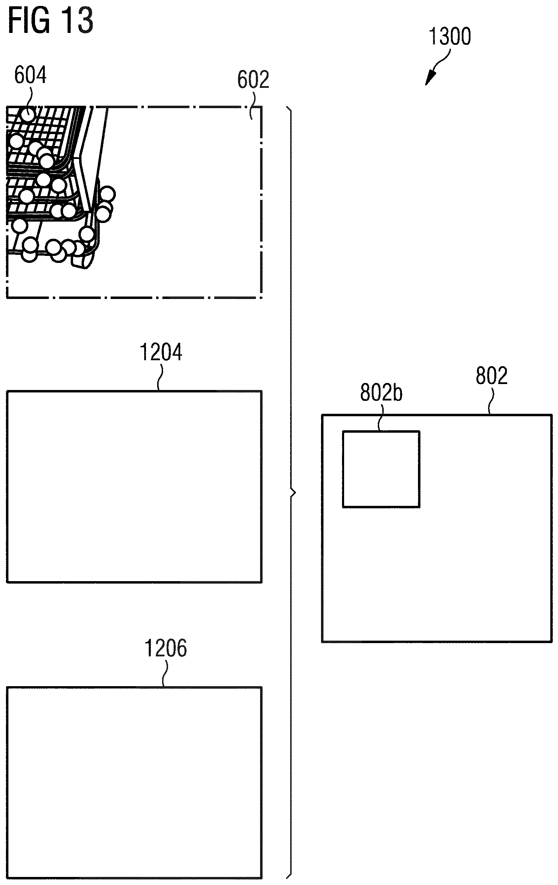

**Fig.13** veranschaulicht ein Verfahren 1300 gemäß verschiedenen Ausführungsformen in einer schematischen Ansicht.

In dem 2D-Bild-Modus kann ermittelt werden, wenn der Transportbehälter 400 nicht in dem Bilderfassungsbereich 208 angeordnet ist (z.B. nicht vor dem Kassensystem abgestellt wurde und/oder zumindest teilweise verdeckt ist). Beispielsweise kann das Konturmuster 604 weniger Merkmale aufweisen, als von dem Kriterium vorgegeben wird. Alternativ oder zusätzlich kann das Konturmuster 604 Merkmale aufweisen, welche einen Rand des Transportbehälters 400 repräsentieren. Anschaulich kann ermittelt werden, ob der Transportbehälter 400 nicht vollständig in dem Bilderfassungsbereich 208 angeordnet und/oder zumindest teilweise verdeckt ist (z.B. von einer Person).

Wurde kein Transportbehälter 400 in dem Bilderfassungsbereich 208 erkannt und/oder erkannt, dass dieser nicht vollständig in dem Bilderfassungsbereich 208 angeordnet und/oder zumindest teilweise verdeckt ist, dann kann ein Fehler-Signal 802b ausgegeben werden, z.B. ein Fehler-Signal 802b (z.B. das Nicht-Erkannt-Signal). Das Fehler-Signal 802b kann beispielsweise auf dem primären Bildschirm 802 ausgegeben werden. Das Fehler-Signal 802b kann beispielsweise eine Information anzeigen, welche repräsentiert, dass kein Transportbehälter 400 erkannt wurde, z.B. ein Schriftzug und/oder eine Farbe (z.B. Gelb).

Optional können zusätzlich (in dem 2D-Modus) Farbinformationen 1204 und/oder (in dem 3D-Modus) Tiefeninformationen 1206 verwendet werden, um zu erkennen, ob ein Transportbehälter 400 in dem Bilderfassungsbereich 208 angeordnet ist. Beispielsweise kann das Konturmuster 604 nicht eindeutig erkannt werden, wenn der Bilderfassungsbereich 208 zu stark beleuchtet wird. In dem Fall kann, z.B. wenn das Erkennen des Transportbehälters 400 auf Grundlage des Konturmusters und/oder der Farbinformationen 1204 bzw. der Tiefeninformationen 1206 zu unterschiedlichen Ergebnissen führt, das Fehler-Signal 802b eine Information aufweisen, welche die Fehlerursache repräsentiert.

Optional kann, wenn der Transportbehälter-Typ nicht erkannt wurde, das Fehler-Signal 802b eine Information aufweisen, welche die Fehlerursache "Transportbehälter-Typ nicht erkannt" repräsentiert.

Weist der Transportbehälter 400 Bereiche auf, welche zu einer Fehler-Erkennung tendieren (z.B. Werbeflächen oder hochreflektive Flächen), können diese Bereiche (Fehler-Bereich) ausgeblendet werden (d.h. nicht zum Ermitteln des Konturmusters 604 herangezogen werden). Alternativ oder zusätzlich kann das Fehler-Signal 802b eine Information aufweisen, welche eine entsprechende Fehlerursache repräsentiert (z.B. "Fehler-Bereich erkannt").

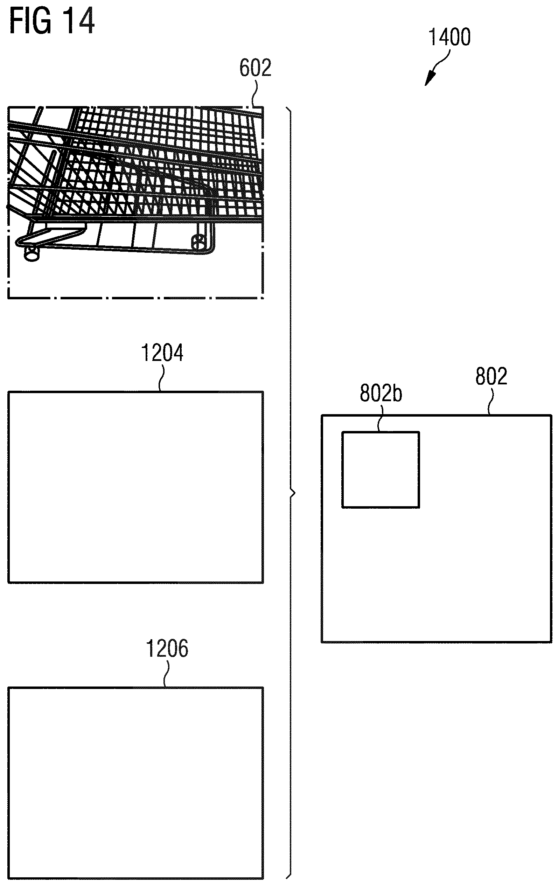

**Fig.14** veranschaulicht ein Verfahren 1400 gemäß verschiedenen Ausführungsformen in einer schematischen Ansicht.

In dem Fall, dass der Transportbehälter 400 in dem Bilderfassungsbereich 208 erkannt wurde (z.B. in dem 2D-Modus), allerdings keine Entscheidung getroffen werden kann, ob dieser leer oder nicht-leer (d.h. dass ein Gegenstand in dem Transportbehälter 400 angeordnet ist) ist, kann ein Fehler-Signal 802b ausgegeben werden. Beispielsweise kann das Fehler-Signal 802b ausgegeben werden, wenn kein Konturmuster ermittelt werden konnte, wenn die Bilddaten verrauscht, unterbelichtet und/oder überbelichtet sind. Beispielsweise können in dem 2D-Modus transparente Gegenstände, dünne Gegenstände und/oder kleiner Gegenstände das Konturmuster nur teilweise aber so stark stören, dass das Ermitteln des Konturmusters beeinträchtigt wird.

Optional können zusätzlich Farbinformationen 1204 (in dem 2D-Modus) und/oder Tiefeninformationen 1206 (in dem 3D-Modus) verwendet werden, um zu erkennen, ob der Transportbehälter 400 anwesend ist. Allerdings kann auch der Fall eintreten, dass die Farbinformationen 1204 nicht eindeutig zugeordnet werden können, z.B. wenn der Gegenstand eine geringe Sättigung aufweist (z.B. ein weiße Farbe), eine hohe Reflektivität oder zumindest teilweise von einem Teil des Transportbehälters 400 verdeckt wird.

Das Fehler-Signal 802b kann beispielsweise eine Information repräsentieren, welche die Fehlerursache "Transportbehälter-Typ erkannt" und/oder "keine Entscheidung möglich" repräsentiert, z.B. ein Schriftzug und/oder eine Farbe (z.B. Orange).

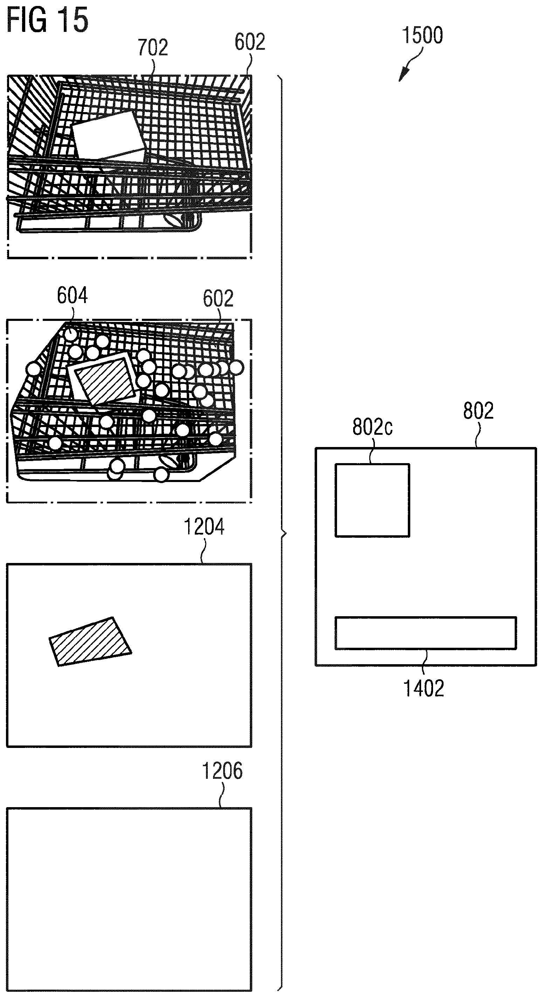

**Fig.15** veranschaulicht ein Verfahren 1500 gemäß verschiedenen Ausführungsformen in einer schematischen Ansicht.

Gemäß verschiedenen Ausführungsformen kann auf Grundlage des Konturmusters 604 (hier mit den Bilddaten 602 überlagert dargestellt) erkannt werden, wenn ein Gegenstand 702 in dem Transportbehälter 400 angeordnet ist, z.B. in dem ersten Transportbereich 322a.

Wurde in dem 2D-Modus ein Gegenstand 702 (z.B. eine Artikel) in dem Transportbehälter 400 erkannt, kann ein Nicht-Leer-Erkannt-Signal 802c ausgeben werden, beispielsweise auf dem primären Bildschirm 802. Das Nicht-Leer-Erkannt-Signal 802c kann beispielsweise eine Information anzeigen, welche repräsentiert, dass der Transportbehälter 400 als nicht-leer erkannt wurde, z.B. ein Schriftzug und/oder eine Farbe (z.B. Rot). Alternativ oder zusätzlich kann das Nicht-Leer-Erkannt-Signal 802c eine Eingabeaufforderung 1402 aufweisen. Die Eingabeaufforderung 1402 kann beispielsweise eine Bestätigung verlangen, dass ob das Nicht-Leer-Erkannt-Signal 802c zutrifft (d.h. kein Fehlalarm ausgelöst wurde). Ist das Nicht-Leer-Erkannt-Signal 802c falsch (d.h. wurde ein Fehlalarm ausgelöst), d.h. wurde fälschlicherweise erkannt, dass ein Gegenstand in dem Transportbehälter 400 angeordnet ist, kann optional ein Anpassen des Kriteriums erfolgen, z.B. derart, dass ein ähnliches Konturmuster 604, wie das, welches zu dem Fehlalarm führt, in Zukunft ein Fehler-Signal auslöst (z.B. dass das ermittelte Konturmuster in den Fehlerbereich fällt).

Optional kann auf Grundlage der Farbinformationen 1204 erkannt und/oder bestätigt werden, ob der Gegenstand 702 in dem Transportbehälter 400 angeordnet ist, z.B. in dem ersten Transportbereich 322a. Beispielsweise können die Kontur- und Farberkennung gleichzeitig ausgelöst werden.

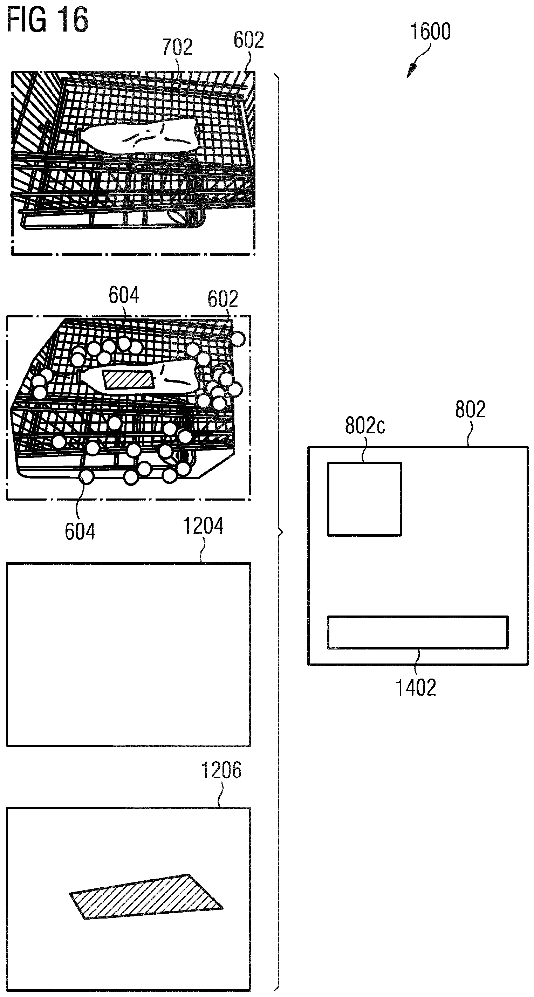

**Fig.16** veranschaulicht ein Verfahren 1600 gemäß verschiedenen Ausführungsformen in einer schematischen Ansicht.

Gemäß verschiedenen Ausführungsformen kann auf Grundlage des Konturmusters 604 erkannt werden, wenn ein Gegenstand 702 in dem Transportbehälter 400 angeordnet ist, z.B. in dem ersten Transportbereich 322a. Beispielsweise kann der Gegenstand 702 einen Teil des ersten Auflage-Flächenelements 402a (vergleiche Fig.3 und Fig.4), des Fahrgestells 312 (vergleiche Fig.3) und/oder des Bild-Hintergrunds verdecken. Das Verdecken und/oder die Flächenbelegung des Verdeckens kann anhand des Konturmusters 604 ermittelt werden.

Ist der Gegenstand 702 transparent, können die Farbinformationen 1204 beispielsweise eine zu geringe Abweichung aufweisen, um dem Kriterium zu genügen.

Optional kann auf Grundlage der Tiefeninformationen 1206 erkannt und/oder bestätigt werden, dass der Gegenstand 702 in dem Transportbehälter 400 angeordnet ist, z.B. in dem ersten Transportbereich 322a. Beispielsweise können die Kontur- und Topografieerkennung gleichzeitig ausgelöst werden.

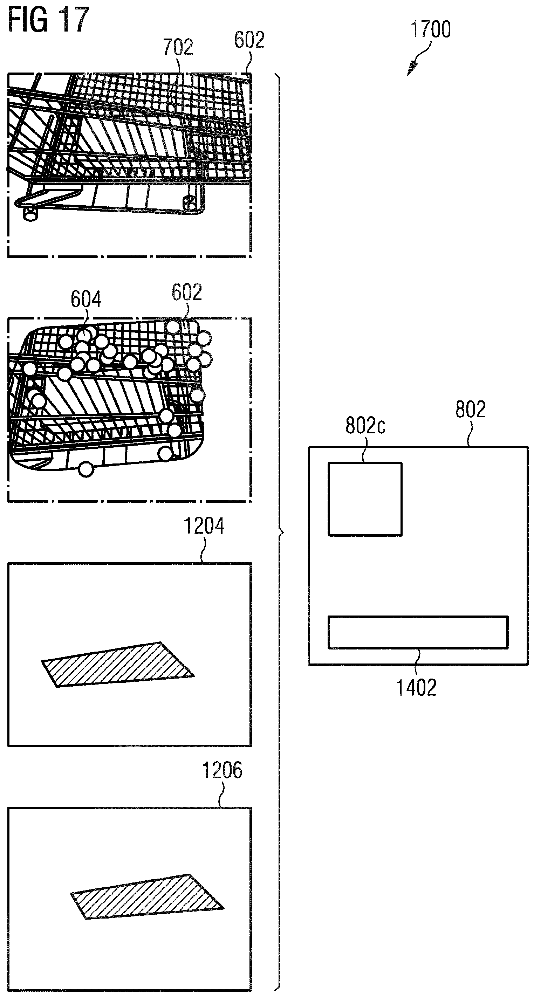

**Fig.17** veranschaulicht ein Verfahren 1700 gemäß verschiedenen Ausführungsformen in einer schematischen Ansicht.

Ist ein Gegenstand 702 in einem zweiten Bereich des Transportbehälters 400 angeordnet, welcher z.B. von dem ersten Bereich 322a zumindest teilweise verdeckt ist, kann auf Grundlage des Konturmusters 604 eine Abweichung erkannt werden, welche durch Gegenstand 702 bewirkt wird. Beispielsweise kann der Gegenstand 702 einen Teil des zweiten Auflage-Flächenelements 402b (vergleiche Fig.3), des Fahrgestells 312 und/oder des Bild-Hintergrunds 602h verdecken.

Optional kann auf Grundlage der Farbinformationen 1204 und/oder der Tiefeninformationen 1206 erkannt und/oder bestätigt werden, dass der Gegenstand 702 in dem Transportbehälter 400 angeordnet ist, z.B. in dem zweiten Transportbereich 322b. Beispielsweise können die Konturerkennung und gleichzeitig die Farberkennung und/oder die Tiefenerkennung ausgelöst werden.

Zum Leer-Erkennen des Transportbehälters 400 können gemäß verschiedenen Ausführungsformen ein Konturmuster 604 und optional Farbinformation 1204 und/oder Tiefeninformationen 1206 verwendet werden. Eine Datenbank kann Referenz-Bilddaten aufweisen und/oder Referenz-Farbinformationen bzw. Referenz-Tiefeninformationen, welche einen leeren Transportbehälter 400 repräsentieren. Zum Leer-Erkennen des Transportbehälters 400 kann somit auf eine Artikeldatenbank verzichtet werden.

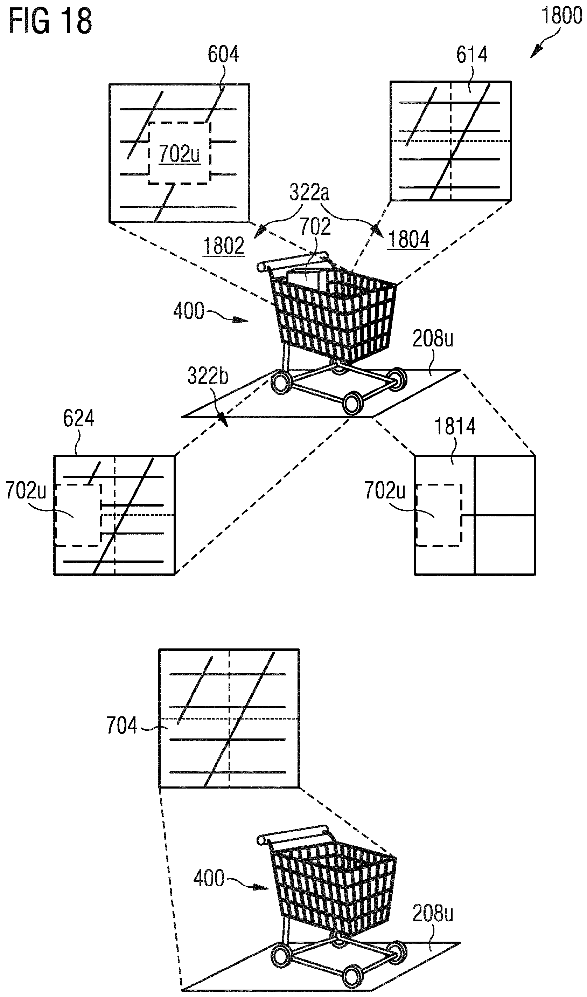

**Fig.18** veranschaulicht ein Verfahren 1800 gemäß verschiedenen Ausführungsformen in einer schematischen Ansicht.

Gemäß verschiedenen Ausführungsformen können die Bilddaten einen ersten Teil 1802 des ersten Transportbereichs 322a repräsentieren (kann auch als erster Teilbereich 1802 bezeichnet werden).

Gemäß verschiedenen Ausführungsformen können zusätzliche Bilddaten eines zusätzlichen Bereichs des Transportbehälters erfasst werden. Die zusätzlichen Bilddaten des zusätzlichen Bereichs können einen zweiten Teil 1804 des ersten Transportbereichs 322a repräsentieren (kann auch als zweiter Teilbereich 1804 bezeichnet werden). Die Bilddaten und die zusätzlichen Bilddaten können mit einem Mal (z.B. gleichzeitig und/oder mittels desselben optischen Sensors), nacheinander und/oder mittels verschiedener optischer Sensoren erfasst werden.

Auf Grundlage der zusätzlichen Bilddaten kann ein zusätzliches Konturmuster 614 (zweites Konturmuster 614) ermittelt werden, was als Referenzmuster 704 verwendet werden kann. Anschaulich kann der zweite Teilbereich 1804 als Referenz herangezogen werden, um zu ermitteln, ob in dem ersten Teilbereich 1802 ein Gegenstand angeordnet ist.

Alternativ oder zusätzlich können die zusätzlichen Bilddaten des zusätzlichen Bereichs den zweiten Transportbereich 322b repräsentieren. Auf Grundlage der zusätzlichen Bilddaten kann ein noch zusätzliches Konturmuster 624 (drittes Konturmuster 624) ermittelt werden. Die Bilddaten und die zusätzlichen Bilddaten können mit einem Mal (z.B. gleichzeitig und/oder mittels desselben optischen Sensors), nacheinander und/oder mittels verschiedener optischer Sensoren erfasst werden. Die Abweichungsgröße kann dann z.B. eine Störung 702u des dritten Konturmusters 624, welche von dem Gegensand 702 hervorgerufen wird, repräsentieren.

Im Falle, dass die Flächenelemente, welche einen Transportbereich 322a, 322b begrenzen (z.B. im Fall eines Korbes anschaulich die Korb-Innenflächen sofern vorhanden, wie z.B. großflächigere Gitter), z.B. das Auflage-Flächenelement 402a, 402b (im Fall eines Korbes anschaulich eine Korbablage, z.B. mit Verstrebungen und/oder einem durchgängigen Einlegeboden) in dem Bilderfassungsbereich 208 (anschaulich Kamerablickfeld) angeordnet sind, kann das Vorhandensein eines Gegenstandes 702 in dem Transportbehälter 400, z.B. auf dem Auflage-Flächenelement 402a, 402b aufliegend, ermittelt werden. Dazu kann eine Abweichung, welche von der sichtbaren Oberfläche des Gegenstandes bewirkt wird, von charakteristischen Eigenschaften eines zuvor angelernten Konturmusters 704 (d.h. das gespeicherte Referenzmuster 704) und/oder eines aktuell ermittelten Konturmusters 614 (d.h. das zusätzliche Konturmuster 614) ermittelt werden. Die Abweichung kann von der Abweichungsgröße repräsentiert werden.

Anschaulich kann die Abweichungsgröße ein Maß für das Fehlen 702u der erwarteten Kontur (z.B. Gitterstruktur bzw. Gitterfläche) und/oder für deren Störung 702u in dem untersuchten Bereich des Transportbehälters 400 sein, welches durch den Gegenstand 702 hervorgerufen wird. Beispielsweise kann in dem zweiten Teilbereich 1804 (z.B. um den Gegenstand 702 herum) und/oder in einem anderen Teil der Bilddaten das erwartete Konturmuster (z.B. Gitterstruktur bzw. Gitterfläche) vorhanden sein.

Alternativ oder zusätzlich kann die Abweichungsgröße ein Maß für Kontrastübergänge und/oder Kontrastsprünge sein, z.B. zwischen benachbarten Bereichen und/oder Flächen (z.B. zwischen dem Auflage-Flächenelement 402a, 402b und dem Gegenstand 702). Dies kann auf Grundlage eines angelernten (z.B. abgespeicherten) Referenzmusters 704 und/oder auf Grundlage zweier ermittelter Konturmuster 604, 614, 624 erfolgen, z.B. mittels In-Verhältnissetzung der ermittelten (z.B. zusammenhängender und/oder benachbarter) Konturmuster 604, 614, 624 untereinander oder mit dem Referenzmuster 704.

Alternativ oder zusätzlich kann ein Konturmuster 1814 ermittelt werden, welches den Untergrund 208u (beispielsweise Fliesenboden mit Fugen, aufgebrachte Designelemente wie Werbelogos auf dem Fußboden, bis hin zu zyklisch angelernten Verschmutzungen, etc.) repräsentiert. Die Abweichungsgröße kann dann ein Maß für das Fehlen 702u der erwarteten Kontur des Untergrunds 208u und/oder für deren Störung 702u sein, welche durch den Gegenstand 702 bewirkt werden, z.B. abweichend von dem Referenzmuster 704 und/oder einem ermittelten Konturmuster 604, 614, 624 (anschaulich erwarteten Konturen/Texturen).

Gemäß verschiedenen Ausführungsformen können nicht und/oder schwierig mittels 3D- und/oder Farberkennung detektierbare Gegenstände (z.B. Flaschenkisten mit schmalen Flaschen und somit zu geringer Oberfläche für die 3D-Projektions-Korrespondenzanalyse, farblose und/oder -arme Gegenstände) in dem zweiten Transportbereich 322b (anschaulich unterhalb des Korbs auf der unteren Ablage) erkannt werden, indem das hierin beschriebene Verfahren (z.B. zum Vergleich der untersuchten Fläche zur Nachbarschaft) verwendet wird.

Gemäß verschiedenen Ausführungsformen kann eine Störung (kann auch als parasitäre Störung bezeichnet werden), welche nicht durch einen Gegenstand 702 bewirkt wird (z.B. Reflexionen auf Metall, Verfärbungen des Transportbehälters 400 durch Rost, Deformationen des Transportbehälters 400, usw.), ermittelt werden. Die parasitäre Störung (kann auch als Negativfall bezeichnet werden) kann somit von dem Vorhandensein eines Gegenstands 702 in dem Transportbehälter 400 (kann auch als Positivfall bezeichnet werden) unterschieden werden. Dadurch kann ein Fehlalarm vermieden oder verringert werden.

Gemäß verschiedenen Ausführungsformen können optional Farbinformationen mittels einer Farberkennung bereitbestellt sein oder werden. Beispielsweise kann die Abweichungsgröße eine Abweichung der Farbinformationen der Bilddaten von Referenz-Bilddaten aufweisen, welche den Transportbehälter 400 und/oder den Bild-Hintergrund 602h (z.B. der Untergrund 208u) bei leerem Transportbehälter 400 repräsentieren. Anschaulich kann eine Konturdifferenzerkennung und Farbdifferenzerkennung (abweichende Merkmale zum Referenzdatensatz) erfolgen. Die Farbinformationen des Untergrunds 208u im Bilderfassungsbereich 208 kann initial angelernt und in der Datenbank abgespeichert werden.

Wurde beispielsweise im Analysebereich eine Veränderung gegenüber einem Referenzfarbspektrum erkannt, kann dies als Indikator dafür genutzt werden, dass der Transportbehälter 400 nicht leer ist.

Gemäß verschiedenen Ausführungsformen kann die Abweichung gegenüber den Referenz-Farbinformationen im Farbraum dynamisch bewertet werden. Damit kann ein Fehlalarm durch einen Einfluss von Umgebungslicht reduziert werden. Mit anderen Worten kann ein Beleuchtungszustand des Bilderfassungsbereichs 208 zum Ermitteln der Abweichungsgröße berücksichtigt werden, z.B. auf Grundlage des zusätzlichen Konturmusters 614.

Gemäß verschiedenen Ausführungsformen können optional 3D-Informationen (Tiefeninformationen) mittels einer Tiefenerkennung bereitgestellt sein oder werden. Die Position des Bereichs (z.B. ein justierbarer Bereich zwischen dem Untergrund 208u, oberhalb des zweiten Auflage-Flächenelements 402b, und dem ersten Auflage-Flächenelement 402a), in dem die Tiefeninformationen ermittelt werden sollen, kann initial angelernt werden (kann anschaulich als zu untersuchende Zone definiert werden). Beispielsweise kann dies auf Grundlage des erkannten Transportbehälter-Typs erfolgen. Die Position der untersuchenden Zone (z.B. deren Grenzen und/oder Schwellenwert) kann in der Datenbank abgespeichert werden, z.B. dem jeweiligen Transportbehälter-Typ zugeordnet.

Wurde in der zu untersuchenden Zone (kann z.B. der zweite Transportbereich 322b sein) eine Abweichung der Tiefeninformation von Referenz-Tiefeninformationen erkannt, kann dies als Indikator genutzt werden, dass der Transportbehälter 400 nicht leer ist.

Gemäß verschiedenen Ausführungsformen kann optional eine Kombinationsvarianz mittels einer Gewichtcharakteristik bereitgestellt sein oder werden.

Anschaulich kann jede Abweichung, welche von der Abweichungsgröße repräsentiert wird, von den verschiedenen Referenzinformationen zur Erkennung des Nicht-Leer-Zustands (Transportbehälter 400 ist nicht leer) genutzt werden. Jeder aktive Sensor kann eine zu der Erkennung des Nicht-Leer-Zustands beitragen. Mittels der Gewichtcharakteristik können die Daten der einzelnen Sensoren gewichtet werden. Damit kann eine intelligente (z.B. anlernbare) Kombination zur Qualitätssteigerung der Auswertung bereitgestellt sein oder werden. Beispielsweise kann die Gewichtcharakteristik angepasst werden, wenn ein Fehlalarm erkannt wurde. Dann können beispielsweise auf Grundlage der Fehlerursache die der Fehlerursache zugehörigen Daten (Konturmuster, Tiefeninformationen und/oder Farbinformationen) weniger gewichtet werden. Alternativ oder zusätzlich kann die Gewichtcharakteristik von dem Transportbehälter-Typ abhängen. Die Gewichtcharakteristik und/oder deren Abhängigkeit kann in der Datenbank abgespeichert werden.

Gemäß verschiedenen Ausführungsformen können das Verfahren zum rechnergestützten Leer-Erkennen des Transportbehälters 400 und die Vorrichtung zum rechnergestützten Leer-Erkennen des Transportbehälters 400 kostengünstig nachgerüstet werden.

Gemäß verschiedenen Ausführungsformen kann ein aufwendiges Anlernen von Zielobjekten (zu erkennenden Gegenständen 702) verzichtet werden. Mit anderen Worten kann auf eine Gegenstand-Datenbank verzichtet werden. Anstelle dessen kann eine Transportbehälter-Datenbank verwendet werden.

Gemäß verschiedenen Ausführungsformen kann eine einfache (z.B. nachträgliche) Montage eines Bilderfassungssensors 202s an eine bestehenden Peripherie, z.B. Halterungen der Elemente des Kassensystems (anschaulich der Kassenmöbel), bereitgestellt sein oder werden.

Gemäß verschiedenen Ausführungsformen kann die Bilderfassungsrichtung 208b auf den Untergrund 208u gerichtet sein oder werden. Damit kann eine Beeinträchtigung des Privatbereichs von Personen (z.B. Kunden) verringert werden, da der Bilderfassungssensor 202s in einem unkritischen Blickwinkel montiert ist.

Gemäß verschiedenen Ausführungsformen kann das Erfassen der zusätzlichen Bilddaten und der Bilddaten gleichzeitig erfolgen. Alternativ oder zusätzlich zu dem zusätzlichen Konturmuster 614 kann das Referenzmuster 704 von einem Datenspeicher ausgelesen werden.

Die verwendeten Bilddaten können mit einer ausreichenden großen Dimension bereitgestellt werden, um anschaulich ein möglichst großes Signal-Rausch-Verhältnis und/oder einen ausreichenden Schwellwert bereitzustellen. Die verwendeten Bilddaten können mit einer ausreichenden kleinen Dimension bereitgestellt werden, um anschaulich einen möglichst geringen Rechenaufwand zu erfordern.

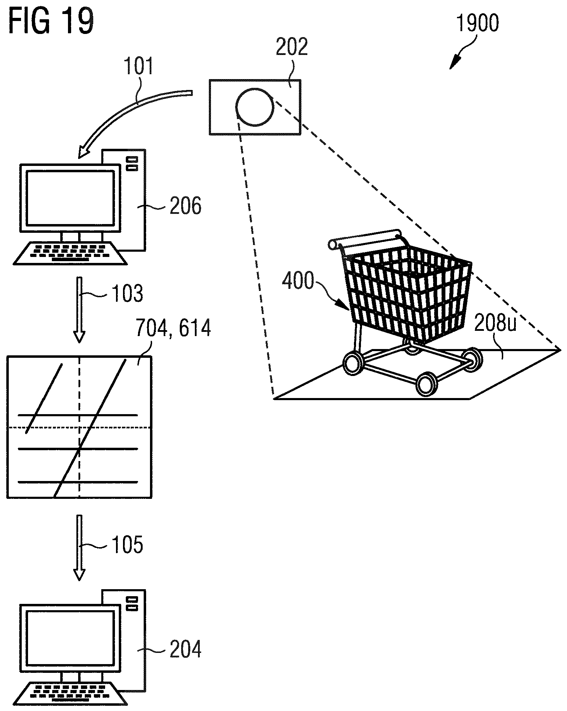

**Fig.19** veranschaulicht ein Verfahren 1900 gemäß verschiedenen Ausführungsformen in einer schematischen Ansicht.

Gemäß verschiedenen Ausführungsformen kann zunächst ein Anlernen des Konturmusters 614 des Transportbehälters 400 und/oder (z.B. merkmalsintensiver Bereiche) des Bild-Hintergrunds 602h (z.B. der Bodenstruktur des Untergrunds 602h, wie Struktur und/oder Textur) erfolgen, z.B. Merkmale, Konturen und/oder Muster (z.B. mittels Mustererkennung) des Konturmusters 614, und optional von Tiefeninformationen und/oder Farbinformationen des Transportbehälters 400 und/oder des Bild-Hintergrunds 602h. Diese Daten können in einer Datenbank (Referenzdatenbank) gespeichert werden.

Dazu können Bildinformationen eines leeren Transportbehälters 400 mittels des Bilderfassungssystems 202 erfasst werden (z.B. vor dem Untergrund 208u). Auf Grundlage der Bildinformationen kann ein Referenzmuster 704, 614 ermittelt werden. Das Referenzmuster 704, 614 kann mittels eines Datenspeichers 204 gespeichert werden.

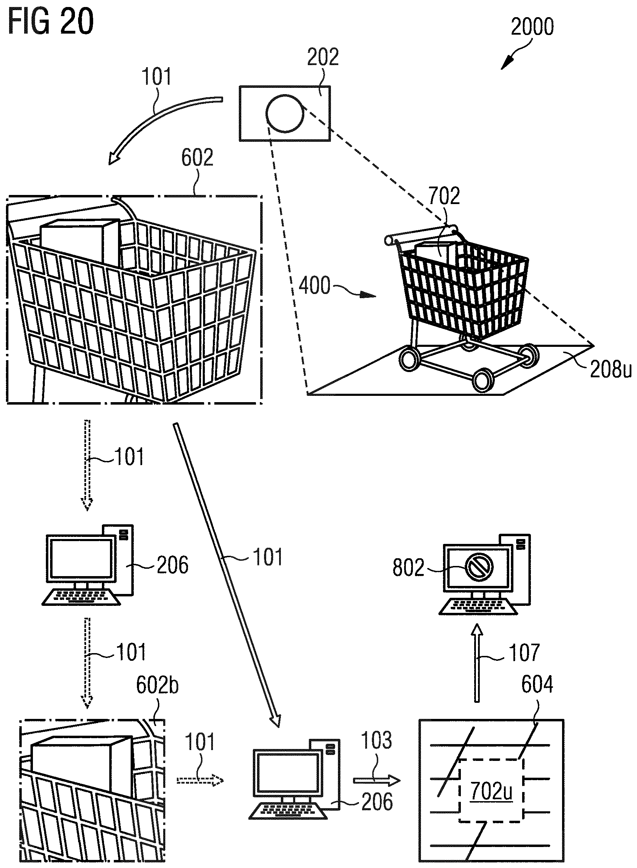

**Fig.20** veranschaulicht ein Verfahren 2000 gemäß verschiedenen Ausführungsformen in einer schematischen Ansicht.

Gemäß verschiedenen Ausführungsformen kann ein Erkennen des Transportbehälters 400 und/oder dessen räumliche Lage in dem Bilderfassungsbereich 208 (Positionsbestimmung) auf Grundlage der Bilddaten 602 erfolgen. Alternativ oder zusätzlich kann das Erkennen des Transportbehälters 400 und/oder dessen räumlicher Lage in dem Bilderfassungsbereich 208 unter Verwendung eines akustischen Sensors (z.B. unter Verwendung von Schallreflexion), eines optoelektronischen Sensors (z.B. einer Lichtschranke) und/oder eines Funketikett-Sensors (z.B. RFID - Identifizierung mit Hilfe elektromagnetischer Wellen) erfolgen. Beispielsweise kann der Transportbehälter 400 ein Funketikett (kann auch als RFID-Transponder bezeichnet werden) und/oder optische Reflektoren (optische Marker) aufweisen.

Gemäß verschiedenen Ausführungsformen können Reflexionen, z.B. deren markante Form, erfasst werden (in Form von Reflexion-Daten), z.B. im 2D-Bildraum. Die Reflexionen können beispielsweise angeregt werden, indem Licht mit einem definierten Wellenlängenbereich (z.B. IR, z.B. von einem IR-Projektor abgestrahlt) und/oder in einem definierten Winkel in den Bilderfassungsbereich 208 emittiert wird. Die Reflexionen können von einer metallischen Gitterstruktur des Transportbehälters und/oder der optischen Reflektoren bewirkt werden. Auf Grundlage eines Vergleichs der erfassten Reflexion-Daten (z.B. mittels eines Merkmalsvergleichs) mit den Referenzdaten, kann ermittelt werden, ob sich ein Transportbehälter in dem Bilderfassungsbereich 208 befindet. Dies kann zu einer erheblich optimierten Reaktionszeit führen.

Optional kann auf Grundlage der räumlichen Lage ein Analysebereich 602b (ROI) ermittelt werden. Der Analysebereich 602b kann anschaulich den Bereich der Bilddaten bezeichnen, welcher im weiteren Verlauf verarbeitet wird, z.B. mittels des Prozessors 206.

Gemäß verschiedenen Ausführungsformen kann mittels des Prozessors 206 der Zustand des Konturmusters 604 ermittelt werden, z.B. ob die Konturen der Gitterstruktur des Transportbehälters 400 vollständig sind oder durch Gegenstände unterbrochen bzw. verdeckt werden.

Optional kann auf Grundlage der Bilddaten 602 bzw. des Analysebereichs 602b eine Farb- und/oder Texturabweichung ermittelt werden, welche durch einen Gegenstand 702 in dem Transportbehälter 400 bewirkt wird (anschaulich durch vorhandene Objekte im Korb oder im unteren Bereich des Transportmediums), gegenüber dem Referenzmuster 704, welches z.B. die unter dem Transportbehälter 400 befindliche Bodenstruktur 208u und/oder anderer Teile des Transportbehälters 400 repräsentiert.

Optional können Abweichung-Daten mit den Daten des akustischen Sensors, des optoelektronischen Sensors und/oder des Funketikett-Sensors kombiniert werden. Damit kann eine Tendenz zum Fehlalarm reduziert werden (anschaulich eine Optimierung der Entscheidungssicherheit).

Optional können auf Grundlage der Bilddaten 602 bzw. des Analysebereichs 602b Tiefeninformation ermittelt werden. Beispielsweise kann der Analysebereich 602b auf Grundlage der Tiefeninformation angepasst werden, z.B. so dass sich dieser mit dem zweiten Transportbereich 322b überlappt.

Gemäß verschiedenen Ausführungsformen kann ein Signal ausgegeben werden, z.B. an das Bedienpersonal und/oder mittels eines Bildschirms 802, welches ein Ergebnis des Leer-Erkennens repräsentiert.

Gemäß verschiedenen Ausführungsformen kann eine kombinatorische Verarbeitung zur Leer-Erkennung des Transportbehälters 400 erfolgen, welche Folgendes aufweist:
- es kann erkannt werden, ob ein ermitteltes Konturmuster, welches einen zu analysierenden Transportbehälter 400 repräsentiert, eine Störung 702u aufweist, welche von einem Gegenstand 702 in dem Transportbehälter 400 bewirkt wird. Mit anderen Worten kann eine Abweichung von einem dem System bekannten Konturmuster (welches z.B. eine freiliegende Gitterstruktur repräsentiert) ermittelt werden.
- optional kann eine Farbdifferenzanalyse gegenüber den Referenz-Bilddaten, z.B. gegenüber Bild-Hintergrundfarb- und Merkmalsinformationen, erfolgen, z.B. eingeschränkt auf den Analysebereich 602b.
- optional kann erkannt werden, ob ein Gegenstand 702 in einem (z.B. skalierbaren und/oder justierbaren) Analysebereich 602b angeordnet ist, welcher einen zumindest teilweise verdeckten Bereich des Transportbehälters 400 bewirkt;
- es kann erkannt werden, ob der Transportbehälter 400 den Zustand leer (Leer-Zustand) aufweist;
- es kann ein eines Signals (Meldesignals) ausgegeben (z.B. erzeugt) werden, wenn ein anderer Zustand als der Leer-Zustand (z.B. wenn im Transportbehälter 400 ein Gegenstand 702 angeordnet ist) und/oder kein Transportbehälter 400 erkannt wurde;
- optional kann ein Anlernen und/oder Ausblenden zeitlich variabler Objekte (mit z.B. wechselnder Oberfläche, wie z.B. Werbemittelhalter) erfolgen, um eine zuverlässige Leer-Erkennung des Transportbehälters 400 bereitzustellen (z.B. obwohl dessen Konturmuster vom Referenzmuster abweicht). Das Anlernen kann aufweisen, ein Konturmuster zu ermitteln, welches das variable Objekt repräsentiert und ein Referenzmuster und/oder die Datenbank zum Berücksichtigen des variablen Objekts zu aktualisieren.

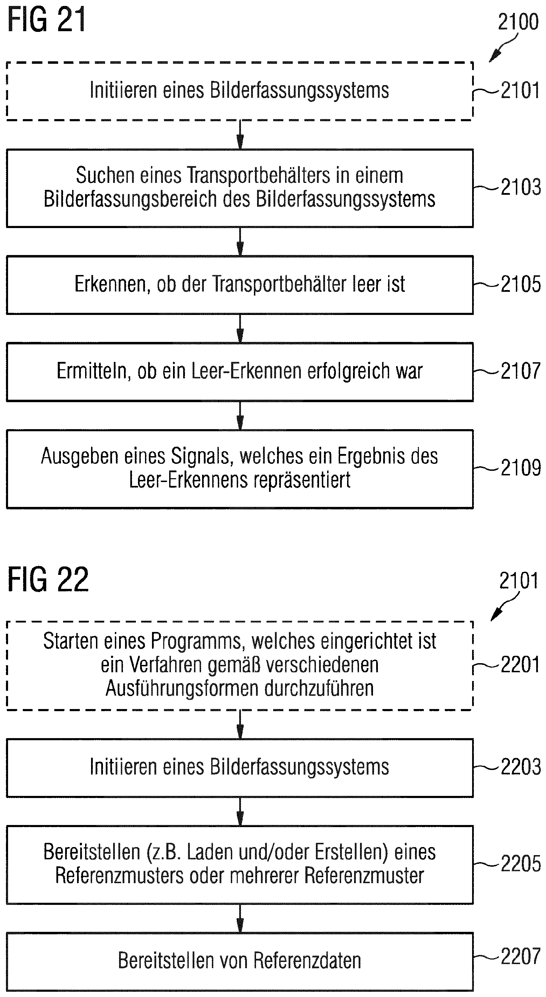

**Fig.21** veranschaulicht ein Verfahren 2100 gemäß verschiedenen Ausführungsformen in einem schematischen Ablaufdiagram.

Optional kann das Verfahren 2100 in 2101 (kann auch als Initialphase 2101 bezeichnet werden) aufweisen: Initiieren eines Bilderfassungssystems.

Ferner kann das Verfahren 2100 in 2103 (kann auch als Transportbehälter-Suchphase 2103 bezeichnet werden) aufweisen: Suchen eines Transportbehälters in einem Bilderfassungsbereich des Bilderfassungssystems.

Ferner kann das Verfahren 2100 in 2105 (kann auch als Leererkennungsphase 2105 oder Detektionsphase 2105 oder Artikeldetektionsphase 2105 bezeichnet werden) aufweisen: Erkennen, ob der Transportbehälter leer ist. Die Leererkennungsphase 2105 kann gemäß verschiedenen Ausführungsformen aufweisen: Ermitteln einer Abweichungsgröße; und Ermitteln ob die Abweichungsgröße einem vorgegebenen Kriterium genügt.

Ferner kann das Verfahren 2100 in 2107 (kann auch als Auswertungsphase 2107 bezeichnet werden) aufweisen: Ermitteln, ob ein Leer-Erkennen erfolgreich war.

Ferner kann das Verfahren 2100 in 2109 (kann auch als Signalausgabephase 2109 bezeichnet werden) aufweisen: Ausgeben eines Signals, welches ein Ergebnis des Leer-Erkennens repräsentiert.

**Fig.22** veranschaulicht eine Initialphase 2101 gemäß verschiedenen Ausführungsformen in einem schematischen Ablaufdiagram.

Die Initialphase 2101 kann in 2201 (kann auch als Programstart 2101 bezeichnet werden) optional aufweisen: Starten eines Programms, welches eingerichtet ist, ein Verfahren gemäß verschiedenen Ausführungsformen durchzuführen. Beispielsweise kann ein Prozessor in einen betriebsbereiten Zustand versetzt werden. Der Prozessor kann eingerichtet sein das Verfahren gemäß verschiedenen Ausführungsformen durchzuführen, z.B. indem dieser das Programm ausführt.

Ferner kann die Initialphase 2101 in 2203 (kann auch als Kamerainitialisierung 2203 bezeichnet werden) aufweisen:
Initiieren eines Bilderfassungssystems, z.B. eines Bilderfassungssensors oder mehrerer Bilderfassungssensoren des Bilderfassungssystems. Beispielsweise kann das Bilderfassungssystems (z.B. der eine Bilderfassungssensor oder können die mehrerer Bilderfassungssensoren) in einen betriebsbereiten Zustand versetzt werden. Alternativ oder zusätzlich kann zumindest ein weiterer (z.B. nicht-optischer) Sensor initiiert werden, z.B. zumindest ein akustischer Sensor, zumindest ein optoelektronischer Sensor und/oder zumindest ein Funketikett-Sensor.

Ferner kann die Initialphase 2101 in 2205 aufweisen: Bereitstellen (z.B. Laden und/oder Erstellen) eines Referenzmusters oder mehrerer Referenzmuster. Das Referenzmuster kann beispielsweise aus einer Referenzdatenbank geladen (d.h. aufgerufen) werden.

Ferner kann die Initialphase 2101 in 2207 aufweisen: Bereitstellen (z.B. Laden und/oder Erstellen) von Referenzdaten. Die Referenzdaten können ein oder mehrere Referenzmuster, Referenz-Topografieinformationen, Referenz-Tiefeninformationen, Referenz-Farbinformationen und/oder Referenz-Tiefeninformationen aufweisen oder daraus gebildet sein. Die Referenzdaten können für die Sensoren erzeugt werden.

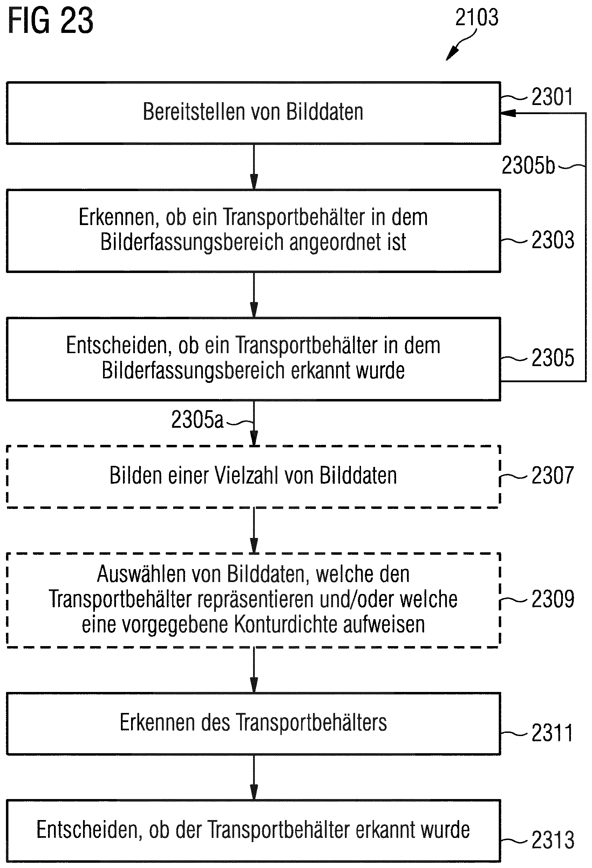

**Fig.23** veranschaulicht eine Transportbehälter-Suchphase 2103 gemäß verschiedenen Ausführungsformen in einem schematischen Ablaufdiagram.

Die Transportbehälter-Suchphase 2103 kann in 2301 aufweisen: Bereitstellen (z.B. Laden und/oder Erstellen) von Bilddaten (kann auch als Kameraframe bezeichnet werden). Die Bilddaten können ein Einzelbild repräsentieren. Zum Laden können die Bilddaten erfasst werden.

Ferner kann die Transportbehälter-Suchphase 2103 in 2303 (kann auch als Leer-Erkennen 2303 des Bilderfassungsbereichs bezeichnet werden) aufweisen: Erkennen, ob ein Transportbehälter in dem Bilderfassungsbereich angeordnet ist. Zum Erkennen des Transportbehälters in dem Bilderfassungsbereich kann ein Erfassen von 3D-Daten (z.B. Topografiedaten und/oder Tiefeninformationen) in dem Bilderfassungsbereich erfolgen. Beispielsweise kann dazu ein Emittieren (z.B. Projizieren) eines optischen Musters in den Bilderfassungsbereich erfolgen und ein Erfassen von Bilddaten des Bilderfassungsbereichs, welche das optische Muster repräsentieren. Das Erfassen der 3D-Daten (z.B. Topografiedaten und/oder Tiefeninformationen) kann auf Grundlage des optischen Musters erfolgen (kann dann auch als IR-Suchphase 2303 bezeichnet werden). Das optische Muster kann anschaulich von einem Transportbehälter in dem Bilderfassungsbereich beeinflusst werden. Anschaulich kann zum Erfassen der 3D-Daten eine Veränderung des optischen Musters erfasst werden, welche durch den Transportbehälter bewirkt wird, wenn dieser in dem Bilderfassungsbereich angeordnet ist. Zumindest ein Bilderfassungssensor des Bilderfassungssystems kann eingerichtet sein, den Spektralbereich des optischen Musters zu erfassen.

Ferner kann die Transportbehälter-Suchphase 2103 in 2305 aufweisen: Entscheiden, ob ein Transportbehälter in dem Bilderfassungsbereich erkannt wurde. Wenn kein Transportbehälter in dem Bilderfassungsbereich erkannt wurde 2305b (Entscheidung=nein 2305b), kann mit 2301 fortgefahren werden, indem das Bereitstellen von weiteren Bilddaten erfolgt. Wenn ein Transportbehälter in dem Bilderfassungsbereich erkannt wurde 2305a (Entscheidung=ja 2305a), kann mit 2307 fortgefahren werden. Das Entscheiden, ob ein Transportbehälter in dem Bilderfassungsbereich erkannt wurde, kann beispielsweise auf Grundlage der 3D-Daten erfolgen. Beispielsweise können die 3D-Daten repräsentieren, ob und/oder wie stark das optische Muster verändert ist, wenn der Transportbehälter in dem Bilderfassungsbereich angeordnet ist. Anschaulich kann die Transportbehälter-Suchphase 2103 eine Schleife bilden, in der so lange Bilddaten erfasst werden, bis Erkannt wurde, dass ein Transportbehälter in den Bilderfassungsbereich hineingebracht wird und/oder bereits darin angeordnet ist.

Zum Entscheiden, ob ein Transportbehälter in dem Bilderfassungsbereich erkannt wurde, kann ein Ermitteln einer 3D-Abweichungsgröße erfolgen, welche eine Abweichung der 3D-Daten von Referenz-3D-Daten repräsentiert, wobei die Referenz-3D-Daten einen leeren Bilderfassungsbereich repräsentieren. Anschaulich können die 3D-Daten mit dem Referenz-3D-Daten verglichen werden. Wenn die Abweichung einem vorgegebenen Kriterium genügt, kann entschieden werden, dass ein Transportbehälter in dem Bilderfassungsbereich erkannt wurde (Entscheidung=ja 2305a). Wenn die Abweichung nicht dem vorgegebenen Kriterium genügt, kann entschieden werden, dass kein Transportbehälter in dem Bilderfassungsbereich erkannt wurde (Entscheidung=nein 2305b).

Die Transportbehälter-Suchphase 2103 kann optional in 2307 aufweisen: Bilden einer Vielzahl von Bilddaten unter Verwendung weiterer Bilddaten (kann auch als weiteres Kameraframe bezeichnet werden). Die weiteren Bilddaten können zumindest ein weiteres Einzelbild repräsentieren. Die Vielzahl von Bilddaten kann anschaulich eine Bildsequenz (z.B. in einer zeitlichen und/oder räumlichen Abfolge) repräsentieren. Zum Bilden der Vielzahl von Bilddaten können die weiteren Bilddaten erfasst werden, nachdem erkannt wurde, dass ein Transportbehälter in den Bilderfassungsbereich hineingebracht wird und/oder in dem Bilderfassungsbereich angeordnet ist. Damit können anschaulich eine große Anzahl von Bilddaten erfasst werden, welche den Transportbehälter beispielsweise in verschiedenen Lagen repräsentieren.

Sind eine Vielzahl von Bilddaten vorhanden kann die Transportbehälter-Suchphase 2103 in 2309 aufweisen: Auswählen der Bilddaten, welche den Transportbehälter repräsentieren und/oder welche eine vorgegebene Konturdichte aufweisen. Beispielsweise kann dazu das Ermitteln der Bilddaten aus der Vielzahl von Bilddaten erfolgen (anschaulich auswählen), welche den Transportbehälter repräsentieren und/oder welche eine vorgegebene Konturdichte aufweisen. Zum Auswählen der Bilddaten können bereits verarbeitete Bilddaten der Vielzahl von Bilddaten verworfen (d.h. nicht berücksichtigt) werden.

Ferner kann die Transportbehälter-Suchphase 2103 in 2311 aufweisen: Erkennen des Transportbehälters unter Verwendung eines Konturmusters. Dazu kann ein Ermitteln eines Konturmusters, welches den Transportbehälter repräsentiert, unter Verwendung der Bilddaten erfolgen. In 2311 kann beispielsweise der Transportbehälter-Typ und/oder eine Lage (Ausrichtung und/oder Position in dem Bilderfassungsbereich) des Transportbehälters erkannt werden.

Ferner kann die Transportbehälter-Suchphase 2103 in 2313 aufweisen: Entscheiden, ob der Transportbehälter erkannt wurde.

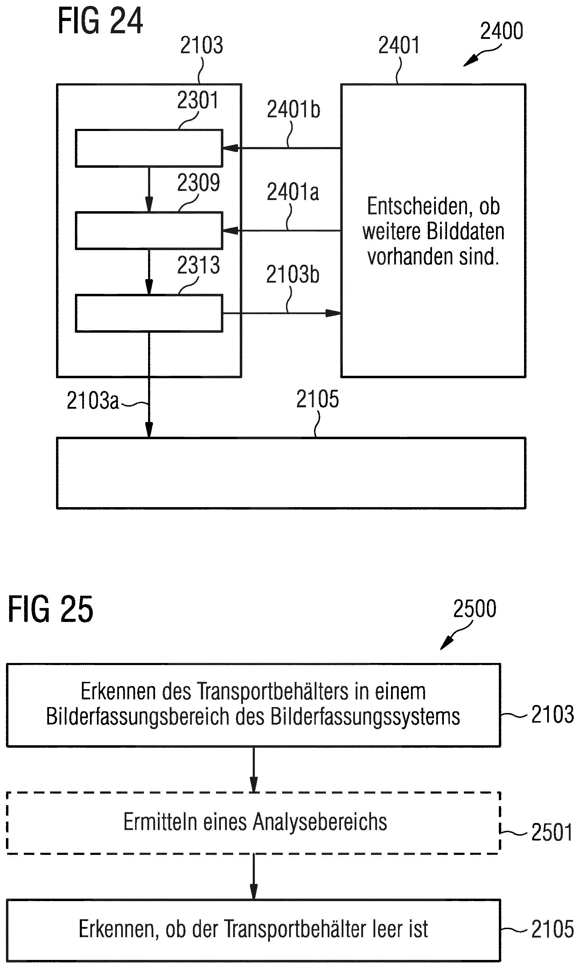

**Fig.24** veranschaulicht ein Verfahren 2400 gemäß verschiedenen Ausführungsformen in einem schematischen Ablaufdiagram.

Das Verfahren 2400 kann die Transportbehälter-Suchphase 2103 und die Leererkennungsphase 2105 aufweisen.

Ferner kann das Verfahren 2400 in 2401 aufweisen: erfolgen, ob weitere Bilddaten vorhanden sind.

Wenn entschieden 2313 wurde, dass ein Transportbehälter in dem Bilderfassungsbereich erkannt wurde 2103a (Entscheidung=ja 2103a), kann mit der Leererkennungsphase 2105 fortgefahren werden.

Wenn entschieden 2313 wurde, dass kein Transportbehälter erkannt wurde 2103b (Entscheidung=nein 2103b), kann das Entscheiden 2401 erfolgen, ob weitere Bilddaten vorhanden sind (die z.B. noch nicht analysiert wurden).

Wenn entschieden 2401 wurde, dass weitere Bilddaten vorhanden sind 2401a (Entscheidung=ja 2401a), kann in 2309 ein Auswählen von anderen Bilddaten aus der Vielzahl von Bilddaten erfolgen. Wenn entschieden 2401 wurde, dass keine weiteren Bilddaten vorhanden sind 2401a (Entscheidung=nein 2401b), kann mit der Transportbehälter-Suchphase 2103 fortgefahren werden, z.B. kann können in 2301 andere Bilddaten bereitgestellt (z.B. erfasst und/oder geladen) werden.

**Fig.25** veranschaulicht ein Verfahren 2500 gemäß verschiedenen Ausführungsformen in einem schematischen Ablaufdiagram.

Das Verfahren 2500 kann die Transportbehälter-Suchphase 2503 und die Leererkennungsphase 2505 aufweisen.

Optional kann das Verfahren 2500 in 2501 aufweisen: Ermitteln eines Analysebereichs. Anschaulich kann aus den Bilddaten ein Teil ausgewählt werden, welcher in der Leererkennungsphase 2105 (Leer-Erkennen des Transportbehälters) verwendet wird. Damit kann der Aufwand reduziert werden.

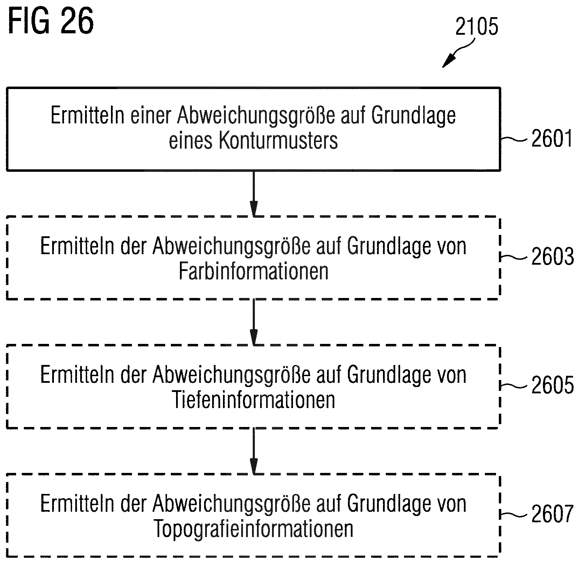

**Fig.26** veranschaulicht eine Leererkennungsphase 2105 gemäß verschiedenen Ausführungsformen in einem schematischen Ablaufdiagram.

Die Leererkennungsphase 2105 kann in 2601 aufweisen: Ermitteln einer Abweichungsgröße auf Grundlage eines Konturmusters. Dazu kann ein Ermitteln des Konturmusters, welches den Transportbehälter repräsentiert, unter Verwendung der Bilddaten (bzw. des Teils der Bilddaten) erfolgen; und ein Ermitteln der Abweichungsgröße, welche eine Abweichung des Konturmusters von zumindest einem Referenzmuster repräsentiert, wobei das zumindest eine Referenzmuster einen leeren Transportbehälter repräsentiert.

Optional kann die Leererkennungsphase 2105 in 2603 aufweisen: Ermitteln der Abweichungsgröße auf Grundlage von Farbinformationen. Dazu kann ein Ermitteln der Farbinformationen, welche den Transportbehälter repräsentieren, unter Verwendung der Bilddaten (bzw. des Teils der Bilddaten) erfolgen; und ein Ermitteln der Abweichungsgröße, welche eine Abweichung der Farbinformationen von Referenz-Farbinformationen repräsentiert, wobei die Referenz-Farbinformationen einen leeren Transportbehälter repräsentieren.

Optional kann die Leererkennungsphase 2105 in 2605 aufweisen: Ermitteln der Abweichungsgröße auf Grundlage von Tiefeninformationen. Dazu kann ein Ermitteln der Tiefeninformationen, welche den Transportbehälter repräsentieren, unter Verwendung der Bilddaten (bzw. des Teils der Bilddaten) erfolgen; und ein Ermitteln der Abweichungsgröße, welche eine Abweichung der Tiefeninformationen von Referenz-Tiefeninformationen repräsentiert, wobei die Referenz-Tiefeninformationen einen leeren Transportbehälter repräsentieren.

Optional kann die Leererkennungsphase 2105 in 2607 aufweisen: Ermitteln der Abweichungsgröße auf Grundlage von Topografieinformationen. Dazu kann ein Ermitteln der Topografieinformationen, welche den Transportbehälter repräsentieren, unter Verwendung der Bilddaten (bzw. des Teils der Bilddaten) erfolgen; und ein Ermitteln der Abweichungsgröße, welche eine Abweichung der Topografieinformationen von Referenz-Topografieinformationen repräsentiert, wobei die Referenz-Topografieinformationen einen leeren Transportbehälter repräsentieren. Die Topografieinformationen können beispielsweise unter Verwendung des optischen Musters ermittelt werden.

Die in Fig.26 veranschaulichte Abfolge kann nacheinander erfolgen (kann auch als Singlethread bezeichnet werden). Beispielsweise kann nach jedem Ermitteln der Abweichungsgröße 2601, 2603, 2605, 2607 ermittelt werden, ob eine eindeutige Entscheidung (z.B. ob der Transportbehälter leer ist oder nicht), zuverlässig getroffen werden kann (vergleiche Fehlerbereich-Erkennen). Dazu kann eine Zuverlässigkeit der Abweichungsgröße ermittelt werden.

Beispielsweise kann die Abweichungsgröße verfeinert werden (in ihrer Zuverlässigkeit erhöht), indem weitere Informationen (Farbinformationen, Tiefeninformationen, und/oder Topografieinformationen) zum Ermitteln der Abweichungsgröße hinzugezogen werden. Beispielsweise kann ein weiteres Ermitteln der Abweichungsgröße 2603, 2605, 2607 erfolgen, wenn ermittelt wurde, dass eine eindeutige Entscheidung nicht zuverlässig getroffen werden kann. Anschaulich können die Daten der Abweichungsgröße nacheinander schrittweise überlagert werden, bis eine ausreichende Entscheidungszuverlässigkeit erreicht ist.

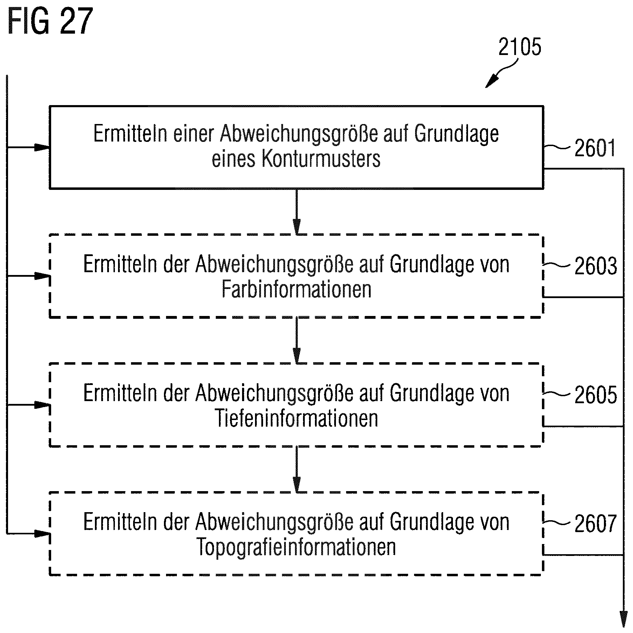

**Fig.27** veranschaulicht eine Leererkennungsphase 2105 gemäß verschiedenen Ausführungsformen in einem schematischen Ablaufdiagram analog zu Fig.26.

Die in Fig.27 veranschaulichte Abfolge kann zumindest teilweise parallel zueinander erfolgen (kann auch als Multithread bezeichnet werden). Beispielsweise können zumindest zwei (z.B. drei oder vier) Informationen zum Ermitteln der Abweichungsgröße 2601, 2603, 2605, 2607 gleichzeitig verarbeitet werden.

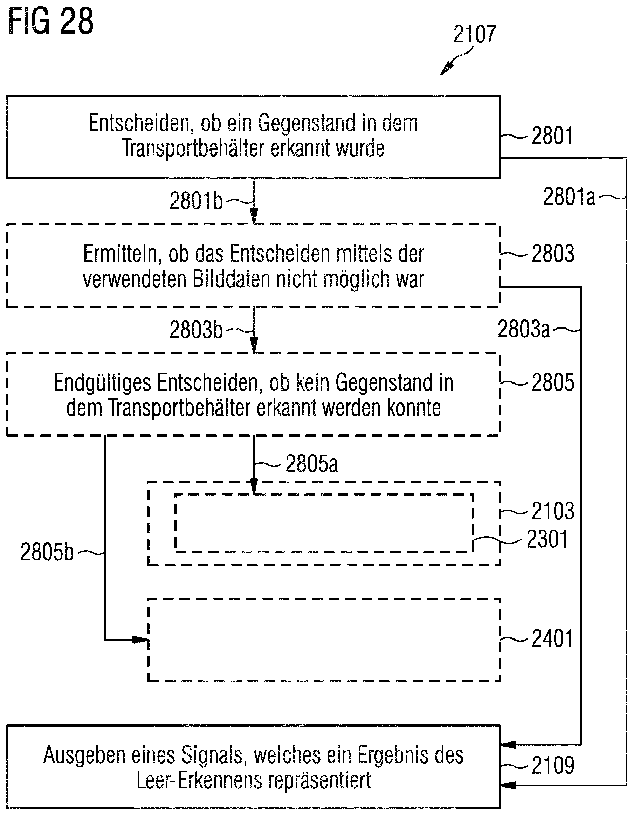

**Fig.28** veranschaulicht eine Auswertungsphase 2107 gemäß verschiedenen Ausführungsformen in einem schematischen Ablaufdiagram.

Die Auswertungsphase 2107 kann in 2801 aufweisen: Entscheiden, ob ein Gegenstand (z.B. ein Artikel) in dem Transportbehälter erkannt wurde. Wenn ein Gegenstand in dem Transportbehälter erkannt wurde 2801a (Entscheidung=ja 2801a), kann ein entsprechendes Signal ausgegeben 2109 werden (z.B. ein Nicht-Leer-Erkannt-Signal). Wenn kein Gegenstand in dem Transportbehälter erkannt wurde 2801b (Entscheidung=nein 2801b), kann optional ein entsprechendes Signal ausgegeben 2109 werden (z.B. ein leer-Erkannt-Signal).

Wenn kein Gegenstand in dem Transportbehälter erkannt wurde 2801b (Entscheidung=nein 2801b), kann optional in 2803 der Auswertungsphase 2107 ein Ermitteln erfolgen, ob das Entscheiden mittels der verwendeten Bilddaten nicht möglich war, beispielsweise weil die Abweichungsgröße nicht zuverlässig genug war und/oder weil die Bilddaten nicht ausreichend repräsentativ waren.

Wenn ermittelt wurde, dass das Entscheiden auf Grundlage der verwendeten Bilddaten nicht möglich war 2803a (Entscheidung=ja 2803a), kann ein entsprechendes Signal ausgegeben 2109 werden (z.B. ein Fehler-Signal). Wenn das Entscheiden mittels der verwendeten Bilddaten möglich war 2803b (Entscheidung=nein 2803b), kann in 2805 der Auswertungsphase 2107 optional ein endgültiges Entscheiden erfolgen, ob kein Gegenstand (z.B. ein Artikel) in dem Transportbehälter erkannt wurde.

Wenn endgültig entschieden wurde, dass kein Gegenstand in dem Transportbehälter erkannt wurde 2805a (Entscheidung=ja 2805a), kann mit der Transportbehälter-Suchphase 2103 von vorn begonnen werden, z.B. kann mit 2301 fortgefahren werden, z.B. indem neue Bilddaten des Transportbehälters bereitgestellt werden. Anschaulich kann dann z.B. die Schleife 2301, 2303, 2305 durchgeführt werden, bis der nächste Transportbehälter erkannt wurde.

Wenn nicht endgültig entschieden wurde, dass kein Gegenstand in dem Transportbehälter erkannt wurde 2805b (Entscheidung=nein 2805b), kann in 2401 ein Entscheiden erfolgen, ob weitere Bilddaten vorhanden sind (die z.B. noch nicht analysiert wurden). Anschaulich kann die Entscheidung, dass kein Gegenstand in dem Transportbehälter angeordnet ist unter Verwendung weiterer Bilddaten der Vielzahl von Bilddaten überprüft werden.

Gemäß verschiedenen Ausführungsformen kann das endgültige Entscheiden 2805 erfolgen, wenn eine vorgegebene Anzahl von Entscheidungen auf Grundlage ein und derselben Vielzahl von Bilddaten übereinstimmen. Somit kann ein Risiko des Fehlerkennens verringert werden.

Wenn weitere Bilddaten vorhanden sind 2401a (Entscheidung=ja 2401a), kann ein Auswählen 2309 von anderen Bilddaten aus der Vielzahl von Bilddaten erfolgen. Wenn keine weiteren Bilddaten vorhanden sind 2401a (Entscheidung=nein 2401b), kann mit der Transportbehälter-Suchphase 2103 von vorn begonnen werden, z.B. kann mit 2301 fortgefahren werden. Dann können beispielsweise neue Bilddaten von demselben Transportbehälter erfasst werden.

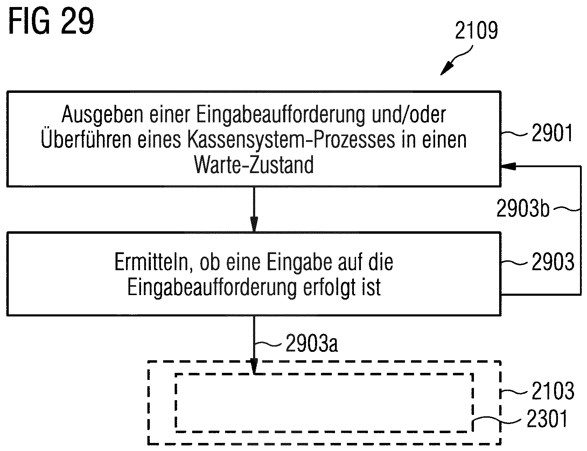

**Fig.29** veranschaulicht eine Signalausgabephase 2109 gemäß verschiedenen Ausführungsformen in einem schematischen Ablaufdiagram.

Die Signalausgabephase 2109 kann in 2901 aufweisen: Ausgeben einer Eingabeaufforderung und/oder Überführen eines Kassensystem-Prozesses in einen Warte-Zustand (kann auch als Programmstopp und/oder Warten auf Benutzereingabe bezeichnet werden). Beispielsweise kann das Programm gestoppt werden. Die Signalausgabephase 2109 kann in 2903 aufweisen: Ermitteln, ob eine Eingabe auf die Eingabeaufforderung erfolgt ist.

Wenn eine Eingabe auf die Eingabeaufforderung erfolgt ist 2903a (Entscheidung=ja 2903a), kann mit der Transportbehälter-Suchphase 2103 von vorn begonnen werden, z.B. kann mit 2301 fortgefahren werden. Wenn keine Eingabe auf die Eingabeaufforderung erfolgt ist 2903b (Entscheidung=nein 2903b), können das Ausgeben der Eingabeaufforderung und/oder der Warte-Zustand aufrecht erhalten werden.

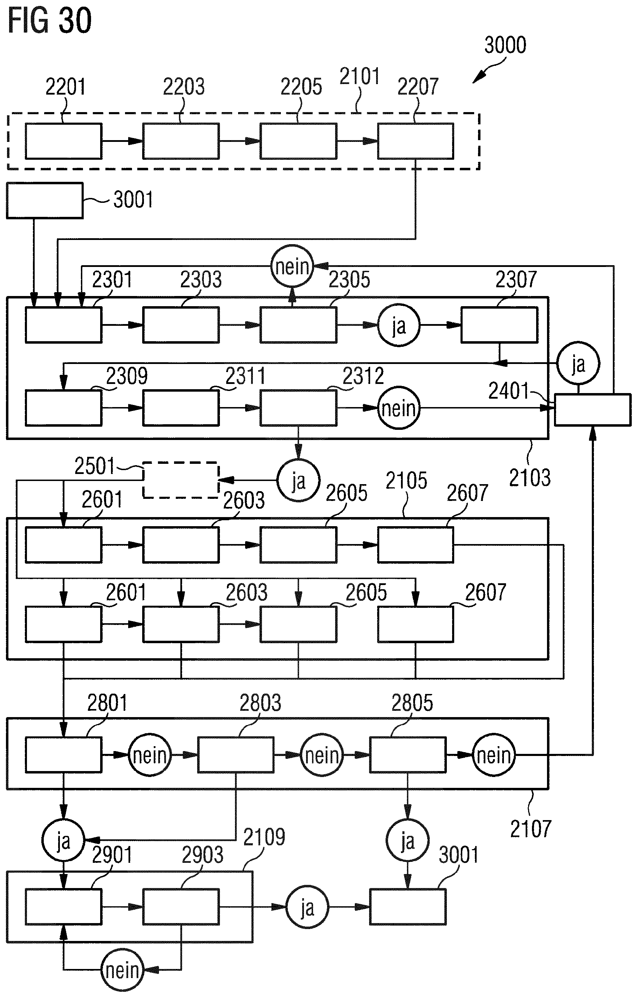

**Fig.30** veranschaulicht ein Verfahren 3000 gemäß verschiedenen Ausführungsformen in einem schematischen Ablaufdiagram, analog zu den Fig.21 bis Fig.29.

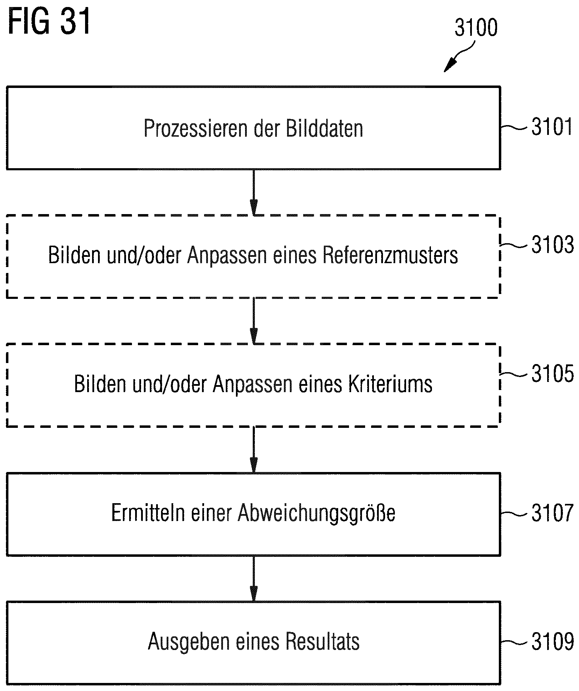

**Fig.31** veranschaulicht ein Verfahren 3100 gemäß verschiedenen Ausführungsformen in einem schematischen Ablaufdiagram.

Das Verfahren 3100 kann in 3101 aufweisen: Prozessieren der Bilddaten (kann auch als Prozessphase 3101 bezeichnet werden).

Das Verfahren 3100 kann optional in 3103 aufweisen: Bilden und/oder Anpassen eines Referenzmusters (kann auch als Referenzmuster-Lernphase 3103 bezeichnet werden), z.B. wenn kein (z.B. passendes) Referenzmuster vorhanden ist und/oder zu wenig Referenzmuster vorhanden sind.

Das Verfahren 3100 kann optional in 3105 aufweisen: Bilden und/oder Anpassen eines Kriteriums (kann auch als Kriterium-Lernphase 3105 bezeichnet werden).

Das Verfahren 3100 kann ferner in 3107 aufweisen: Ermitteln einer Abweichungsgröße (kann auch als Erkennungsphase 3107 bezeichnet werden).

Das Verfahren 3100 kann ferner in 3109 aufweisen: Ausgeben eines Resultats (kann auch als Ausgabephase 3109 bezeichnet werden), z.B. Ausgeben der Abweichungsgröße.

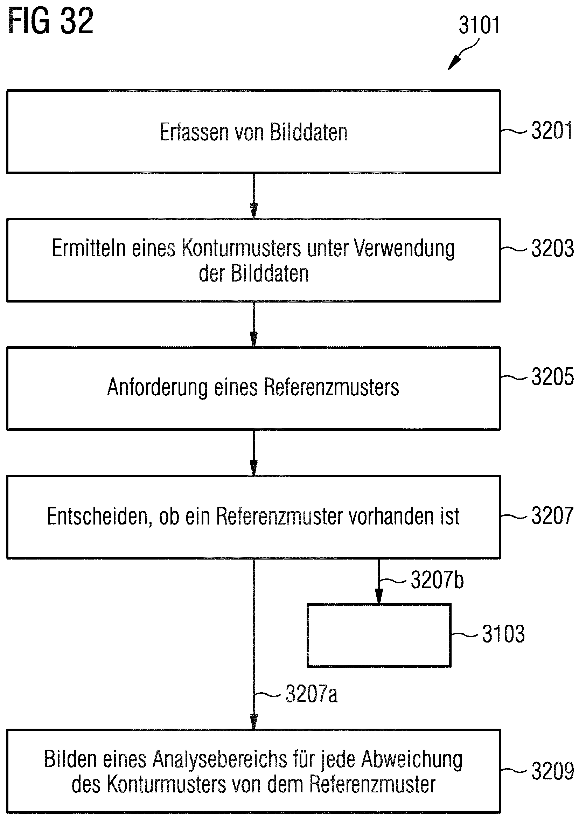

**Fig.32** veranschaulicht eine Prozessphase 3101 gemäß verschiedenen Ausführungsformen in einem schematischen Ablaufdiagram.

Die Prozessphase 3101 kann in 3201 aufweisen: Erfassen von Bilddaten.

Die Prozessphase 3101 kann in 3203 ferner aufweisen: Ermitteln eines Konturmusters unter Verwendung der Bilddaten. Beispielsweise kann das Konturmuster unter Verwendung eines Gauß-Differenz-Algorithmus (kann auch als difference of Gaussian bezeichnet werden, DoG) gebildet werden. Der Gauß-Differenz-Algorithmus kann aufweisen auf Grundlage der Bilddaten eine unscharfe Version der Bilddaten zu bilden, und diese von den Bilddaten abzuziehen (zu subtrahieren). Das Bilden der unscharfen Version kann unter Verwendung eines Gauß-Kernels erfolgen, z.B. indem die Bilddaten unter Verwendung des Gauß-Kernels gefaltet werden. Alternativ oder zusätzlich kann das Bilden der unscharfen Version unter Verwendung eines Weichzeichners erfolgen.

Die Prozessphase 3101 kann in 3205 ferner aufweisen: Anfordern eines Referenzmusters.

Die Prozessphase 3101 kann in 3207 ferner aufweisen: Entscheiden, ob ein Referenzmuster vorhanden ist. Wenn ein Referenzmuster vorhanden ist 3207a (Entscheidung=ja 3207a), kann mit 3209 fortgefahren werden. Wenn kein Referenzmuster vorhanden ist 3207b (Entscheidung=ja 3207b), kann mit 3103 fortgefahren werden, z.B. indem ein Referenzmuster gebildet wird.

Die Prozessphase 3101 kann in 3209 optional aufweisen: Bilden eines Analysebereichs für jede Abweichung des Konturmusters von dem Referenzmuster. Dazu können eine oder mehrere Abweichungen des Konturmusters von dem Referenzmuster ermittelt werden.

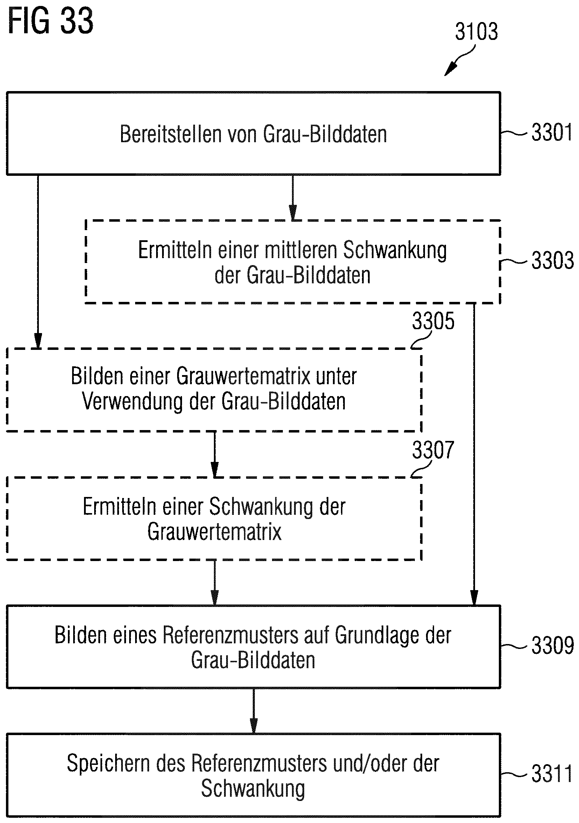

**Fig.33** veranschaulicht eine Referenzmuster-Lernphase 3103 gemäß verschiedenen Ausführungsformen in einem schematischen Ablaufdiagram.

Die Referenzmuster-Lernphase 3103 kann in 3301 aufweisen: Bereitstellen (z.B. Bilden) von Grau-Bilddaten. Dazu können die Bilddaten in Graustufen umgewandelt werden (sofern diese nicht schon in Graustufen vorliegen).

Die Referenzmuster-Lernphase 3103 kann in 3303 optional aufweisen: Ermitteln einer mittleren Schwankung der Grau-Bilddaten. Die mittlere Schwankung kann eine mittlere Schwankung der Grauwerte der Grau-Bilddaten repräsentieren. Zum Ermitteln der mittleren Schwankung kann eine Mittelwertabweichung und/oder eine Standardabweichung ermittelt werden.

Die Referenzmuster-Lernphase 3103 kann in 3305 optional aufweisen: Bilden einer Grauwertematrix unter Verwendung der Grau-Bilddaten.

Die Referenzmuster-Lernphase 3103 kann in 3307 optional aufweisen: Ermitteln einer Schwankung der Grauwertematrix, z.B. einer mittleren Schwankung und/oder ein Schwankung benachbarter Einträge der Grauwertematrix. Die Schwankung kann einen Kontrast, eine Homogenität und/oder eine Energie der Grauwertematrix repräsentieren.

Die Referenzmuster-Lernphase 3103 kann in 3309 ferner aufweisen: Bilden eines Referenzmusters auf Grundlage der Grau-Bilddaten, z.B. unter Verwendung der Schwankung (gemäß der Grauwertematrix und/oder gemäß den Grau-Bilddaten).

Die Referenzmuster-Lernphase 3103 kann in 3311 optional aufweisen: Speichern des Referenzmusters und optional der Schwankung, z.B. in einer Referenzdatenbank. Alternativ oder zusätzlich kann das Referenzmuster direkt weiterverarbeitet werden.

Alternativ oder zusätzlich kann die Referenzmuster-Lernphase 3103 durchgeführt werden, wenn endgültig entschieden wurde, dass kein Gegenstand in dem Transportbehälter angeordnet ist, und/oder wenn eine Eingabe repräsentiert, dass kein Gegenstand in dem Transportbehälter angeordnet ist.

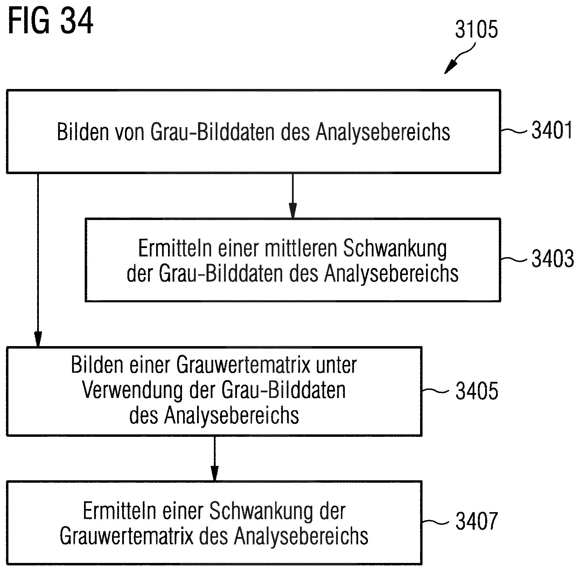

**Fig.34** veranschaulicht eine Kriterium-Lernphase 3105 gemäß verschiedenen Ausführungsformen in einem schematischen Ablaufdiagram.

Die Kriterium-Lernphase 3105 kann in 3401 aufweisen: Bilden von Grau-Bilddaten des Analysebereichs. Dazu kann der Analysebereich der Bilddaten in Graustufen umgewandelt werden (sofern dieser nicht schon in Graustufen vorliegt).

Die Kriterium-Lernphase 3105 kann in 3403 ferner aufweisen: Ermitteln einer mittleren Schwankung der Grau-Bilddaten des Analysebereichs. Die mittlere Schwankung kann eine mittlere Schwankung der Grauwerte der Grau-Bilddaten repräsentieren. Zum Ermitteln der mittleren Schwankung kann eine Mittelwertabweichung und/oder eine Standardabweichung ermittelt werden.

Alternativ oder zusätzlich kann die Kriterium-Lernphase 3105 in 3405 aufweisen: Bilden einer Grauwertematrix unter Verwendung der Grau-Bilddaten des Analysebereichs. In dem Fall kann die Kriterium-Lernphase 3105 in 3407 aufweisen: Ermitteln einer Schwankung der Grauwertematrix des Analysebereichs, z.B. einer mittleren Schwankung und/oder ein Schwankung benachbarter Einträge der Grauwertematrix. Die Schwankung kann einen Kontrast, eine Homogenität und/oder eine Energie der Grauwertematrix repräsentieren.

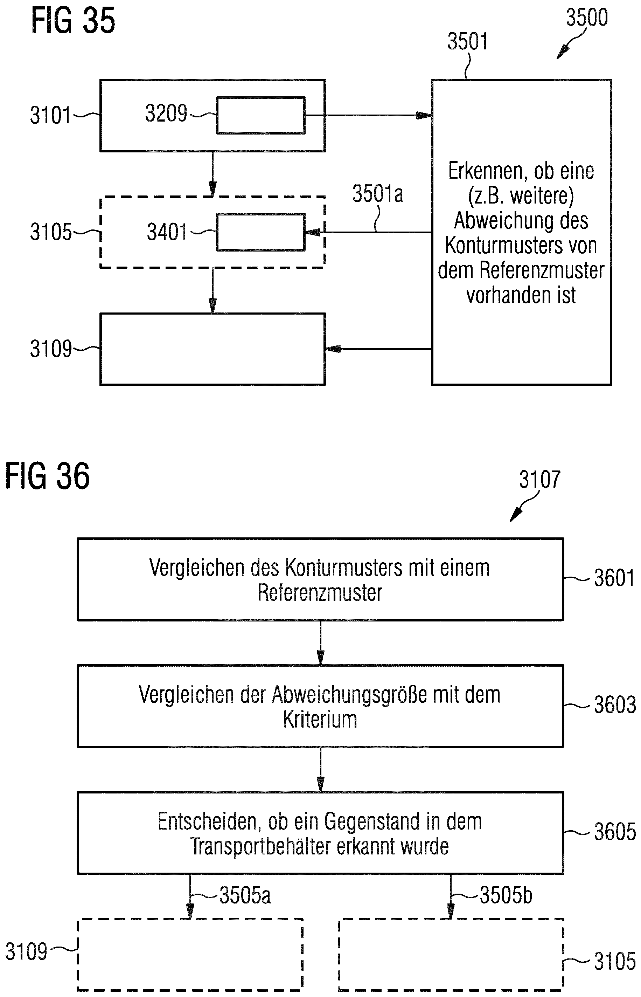

**Fig.35** veranschaulicht ein Verfahren 3500 gemäß verschiedenen Ausführungsformen in einem schematischen Ablaufdiagram.

Das Verfahren 3500 kann die Prozessphase 3101 und die Ausgabephase 3109 aufweisen. Optional kann das Verfahren 3500 die Kriterium-Lernphase 3105 aufweisen.

Das Verfahren 3500 kann ferner in 3501 aufweisen: Erkennen, ob eine Abweichung des Konturmusters von dem Referenzmuster vorhanden ist, z.B. eine weitere Abweichung, wenn bereits zumindest eine Abweichung erkannt wurde.

Das Erkennen, ob eine Abweichung des Konturmusters von dem Referenzmuster vorhanden ist, kann nach der Prozessphase 3101 erfolgen, z.B. nach dem Bilden 3209 eines Analysebereichs für jede Abweichung des Konturmusters von dem Referenzmuster. Anschaulich kann so iterativ jeder Abweichung ein Analysebereich zugeordnet werden.

Das Resultat, ob eine Abweichung des Konturmusters von dem Referenzmuster vorhanden ist, kann in 3109 ausgegeben werden.

Wenn eine Abweichung des Konturmusters von dem Referenzmuster erkannt wurde 3605a (Entscheidung=ja 3605a), kann optional die Kriterium-Lernphase 3105 durchgeführt werden, z.B. fortfahrend mit dem Bilden 3401 von Grau-Bilddaten des Analysebereichs.

**Fig.36** veranschaulicht eine Erkennungsphase 3107 gemäß verschiedenen Ausführungsformen in einem schematischen Ablaufdiagram.

Die Erkennungsphase 3107 kann in 3601 aufweisen: Vergleichen des Konturmusters mit dem Referenzmuster. Dazu kann das Konturmusters mit der Referenzdatenbank verglichen werden, z.B. um das entsprechende Konturmuster auszuwählen. Anhand des Vergleichens kann die Abweichungsgröße ermitteln werden.

Die Erkennungsphase 3107 kann in 3603 ferner aufweisen: Vergleichen der Abweichungsgröße mit dem Kriterium.

Die Erkennungsphase 3607 kann in 3603 ferner aufweisen: Entscheiden, ob ein Gegenstand in dem Transportbehälter erkannt wurde. Entspricht die Abweichungsgröße dem Kriterium, kann entschieden werden, dass ein Gegenstand in dem Transportbehälter erkannt worden ist. Entspricht die Abweichungsgröße nicht dem Kriterium, kann entschieden werden, dass kein Gegenstand in dem Transportbehälter erkannt worden ist.

Wenn ein Gegenstand in dem Transportbehälter erkannt wurde 3605a (Entscheidung=ja 3605a), kann mit 3109 fortgefahren werden, d.h. das Resultat, dass ein Gegenstand in dem Transportbehälter erkannt wurde, kann ausgegeben 3109 werden. Wenn kein Gegenstand in dem Transportbehälter erkannt wurde 3605b (Entscheidung=ja 3605b), kann mit 3501 fortgefahren werden. Dann kann anschaulich die nächste Abweichung und/oder der nächste Analysebereich prozessiert werden.

Wurden alle Abweichungen und/oder der Analysebereiche der Bilddaten prozessiert, kann mit 2401 fortgefahren werden.

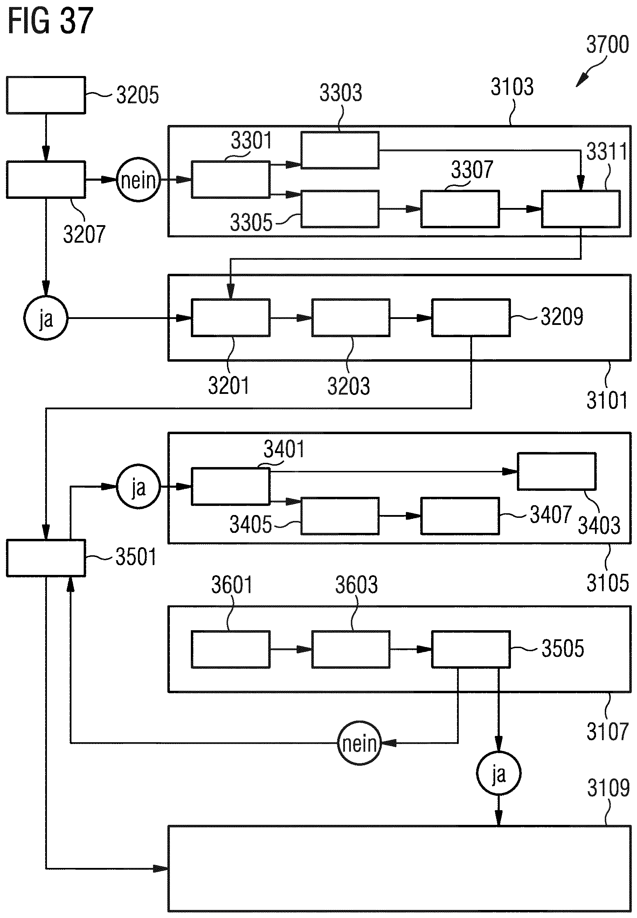

**Fig.37** veranschaulicht ein Verfahren 3700 gemäß verschiedenen Ausführungsformen in einem schematischen Ablaufdiagram, analog zu den Fig.31 bis Fig.36.

Das Ausgegebene 3109 Resultat kann weiterverarbeitet werden, z.B. zum Ausgeben des Signals.

## Patentansprüche

1. Verfahren (100) zum rechnergestützten Leer-Erkennen eines Transportbehälters (400), das Verfahren (100) aufweisend:
• Erfassen (101) von Bilddaten eines Bereichs des Transportbehälters (400);
• Ermitteln (103) eines Konturmusters mittels einer Merkmalserkennung, welches eine Gitterstruktur des Transportbehälters (400) repräsentiert, unter Verwendung der Bilddaten;
• Ermitteln (105) einer Abweichungsgröße, welche als Muster-Abweichung eine Flächenbelegungs-Abweichung, eine Kontrast-Abweichung und/oder eine Konturverlauf-Abweichung des Konturmusters von zumindest einem Referenzmuster repräsentiert, wobei das zumindest eine Referenzmuster einen leeren Transportbehälter (400) repräsentiert;
• Ermitteln von Tiefeninformationen auf Grundlage der Bilddaten; wobei die Abweichungsgröße ferner eine Abweichung der Tiefeninformationen von Referenz-Tiefeninformationen repräsentiert, wobei die Referenz-Tiefeninformationen einen leeren Transportbehälter (400) repräsentieren;
• Ausgeben (107) eines Signals, wenn die Abweichungsgröße einem vorgegebenen Kriterium genügt.

2. Verfahren (100) gemäß Anspruch 1, ferner aufweisend:
• Erfassen von Bilddaten eines zusätzlichen Bereichs des Transportbehälters (400);
• Ermitteln eines zusätzlichen Konturmusters, welches den zusätzlichen Bereich repräsentiert, auf Grundlage der Bilddaten;
• wobei ein Referenzmuster des zumindest einen Referenzmusters das zusätzliche Konturmuster aufweist.

3. Verfahren (100) gemäß Anspruch 1 oder 2,
• wobei der Transportbehälter (400) zum Erfassen (101) der Bilddaten in einem Bilderfassungsbereich angeordnet ist, wobei der Bilderfassungsbereich einen Bild-Hintergrund des Transportbehälters (400) definiert; und
• wobei ein Referenzmuster des zumindest einen Referenzmusters ein Konturmuster aufweist, welches den Bild-Hintergrund repräsentiert.

4. Verfahren (100) gemäß einem der Ansprüche 1 bis 3, wobei das vorgegebene Kriterium einen leeren Transportbehälter (400) repräsentiert und das Signal ein Leer-Erkannt-Signal aufweist.

5. Verfahren (100) gemäß einem der Ansprüche 1 bis 4,
wobei das Ausgeben des Signals aufweist, eine Eingabeaufforderung auszugeben, und
wobei ein Kassensystem-Prozess in einen Warte-Zustand übergeht, bis eine Eingabe auf die Eingabeaufforderung erfolgt.

6. Verfahren (100) gemäß einem der Ansprüche 1 bis 5, ferner aufweisend:
Ermitteln von Farbinformationen auf Grundlage der Bilddaten;
wobei die Abweichungsgröße ferner eine Abweichung der Farbinformationen von Referenz-Farbinformationen repräsentiert, wobei die Referenz-Farbinformationen einen leeren Transportbehälter (400) repräsentieren.

7. Verfahren (100) gemäß einem der Ansprüche 1 bis 6, ferner aufweisend:
Ermitteln von Topografieinformationen auf Grundlage der Bilddaten;
wobei die Abweichungsgröße ferner eine Abweichung der Topografieinformationen von Referenz-Topografieinformationen repräsentiert, wobei die Referenz-Topografieinformationen einen leeren Transportbehälter (400) repräsentieren.

8. Verfahren (100) gemäß einem der Ansprüche 1 bis 7, wobei das Ausgeben des Signals aufweist, eine Eingabeaufforderung auszugeben, das Verfahren ferner aufweisend:
Aktualisieren des zumindest einen Referenzmusters auf Grundlage des Konturmusters, wenn eine Eingabe auf die Eingabeaufforderung einen Leer-Zustand des Transportbehälters repräsentiert.

9. Verfahren (100) gemäß einem der Ansprüche 1 bis 8, wobei das Ermitteln der Tiefeninformationen aufweist, Bildinformationen eines zusätzlichen Bereichs des Transportbehälters (400) durch den Bereich hindurch zu erfassen (101).

10. Verfahren (100) gemäß einem der Ansprüche 1 bis 9, wobei das Konturmuster zumindest eines von Folgenden repräsentiert:
• eine Störung, welche von einem Gegenstand bewirkt wird, wenn der Gegenstand in dem Transportbehälter (400) angeordnet ist; und/oder
• einen Bild-Hintergrund, welche von einem Bilderfassungsbereich definiert wird, in dem das Erfassen (101) der Bilddaten erfolgt.

11. Vorrichtung zum rechnergestützten Leer-Erkennen eines Transportbehälters (400), die Vorrichtung aufweisend:
ein optisches Bilderfassungssystem (202) zum Erfassen von Bilddaten;
einen Datenspeicher (204), zum Abspeichern zumindest eines Referenzmuster und/oder in welchem zumindest ein Referenzmuster abgespeichert ist, wobei das Referenzmuster einen leeren Transportbehälter (400) repräsentiert;
einen Prozessor (206), welcher eingerichtet ist, folgendes Verfahren (100) durchzuführen:
• Erfassen (101) von Bilddaten eines Transportbehälters (400) mittels des Bilderfassungssystem;
• Ermitteln (103) eines Konturmusters mittels einer Merkmalserkennung, welches eine Gitterstruktur des Transportbehälters (400) repräsentiert, unter Verwendung der Bilddaten;
• Ermitteln (105) einer Abweichungsgröße, welche als Muster-Abweichung eine Flächenbelegungs-Abweichung, eine Kontrast-Abweichung und/oder eine Konturverlauf-Abweichung des Konturmusters von zumindest einem Referenzmuster repräsentiert, wobei das zumindest eine Referenzmuster einen leeren Transportbehälter (400) repräsentiert;
• Ermitteln von Tiefeninformationen auf Grundlage der Bilddaten; wobei die Abweichungsgröße ferner eine Abweichung der Tiefeninformationen von Referenz-Tiefeninformationen repräsentiert, wobei die Referenz-Tiefeninformationen einen leeren Transportbehälter (400) repräsentieren; und
• Ausgeben (107) eines Signals, wenn die Abweichungsgröße einem vorgegebenen Kriterium genügt.

## Claims

1. Method (100) for the computer-aided recognition of a transport container (400) being empty, the method (100) comprising:
• capturing (101) image data of a region of the transport container (400);
• determining (103) a contour pattern by means of feature recognition, which contour pattern represents a lattice structure of the transport container (400), using the image data;
• determining (105) a deviation variable, which represents as pattern deviation an area occupation deviation, a contrast deviation and/or a contour profile deviation of the contour pattern from at least one reference pattern, wherein the at least one reference pattern represents an empty transport container (400);
• determining depth information on the basis of the image data; wherein the deviation variable furthermore represents a deviation of the depth information from reference depth information, wherein the reference depth information represents an empty transport container (400);
• outputting (107) a signal if the deviation variable satisfies a predefined criterion.

2. Method (100) according to Claim 1, furthermore comprising:
• capturing image data of an additional region of the transport container (400);
• determining an additional contour pattern, which represents the additional region, on the basis of the image data;
• wherein a reference pattern of the at least one reference pattern comprises the additional contour pattern.

3. Method (100) according to Claim 1 or 2,
• wherein the transport container (400) is arranged in an image capture region for capturing (101) the image data, wherein the image capture region defines an image background of the transport container (400); and
• wherein a reference pattern of the at least one reference pattern comprises a contour pattern representing the image background.

4. Method (100) according to any of Claims 1 to 3, wherein the predefined criterion represents an empty transport container (400) and the signal comprises a recognized-as-empty signal.

5. Method (100) according to any of Claims 1 to 4, wherein outputting the signal comprises outputting an input request, and
wherein a checkout system process transitions into a standby state until an input is carried out in response to the input request.

6. Method (100) according to any of Claims 1 to 5, furthermore comprising:
determining colour information on the basis of the image data;
wherein the deviation variable furthermore represents a deviation of the colour information from reference colour information, wherein the reference colour information represents an empty transport container (400).

7. Method (100) according to any of Claims 1 to 6, furthermore comprising:
determining topography information on the basis of the image data;
wherein the deviation variable furthermore represents a deviation of the topography information from reference topography information, wherein the reference topography information represents an empty transport container (400) .

8. Method (100) according to any of Claims 1 to 7, wherein outputting the signal comprises outputting an input request, the method furthermore comprising:
updating the at least one reference pattern on the basis of the contour pattern if an input in response to the input request represents an empty state of the transport container.

9. Method (100) according to any of Claims 1 to 8, wherein determining the depth information comprises capturing (101) image information of an additional region of the transport container (400) through the region.

10. Method (100) according to any of Claims 1 to 9, wherein the contour pattern represents at least one of the following:
• a disturbance that is brought about by an object if the object is arranged in the transport container (400); and/or
• an image background defined by an image capture region in which capturing (101) the image data is carried out.

11. Device for the computer-aided recognition of a transport container (400) being empty, the device comprising:
an optical image capture system (202) for capturing image data;
a data storage medium (204) for storing at least one reference pattern and/or in which at least one reference pattern is stored, wherein the reference pattern represents an empty transport container (400);
a processor (206), configured to carry out the following method (100):
• capturing (101) image data of a transport container (400) by means of the image capture system;
• determining (103) a contour pattern by means of feature recognition, which contour pattern represents a lattice structure of the transport container (400), using the image data;
• determining (105) a deviation variable, which represents as pattern deviation an area occupation deviation, a contrast deviation and/or a contour profile deviation of the contour pattern from at least one reference pattern, wherein the at least one reference pattern represents an empty transport container (400);
• determining depth information on the basis of the image data; wherein the deviation variable furthermore represents a deviation of the depth information from reference depth information, wherein the reference depth information represents an empty transport container (400); and
• outputting (107) a signal if the deviation variable satisfies a predefined criterion.

## Revendications

1. Procédé (100) pour la reconnaissance assistée par ordinateur de l'état vide d'un récipient de transport (400), le procédé (100) comprenant :
• capture (101) de données d'image d'une zone du récipient de transport (400) ;
• détermination (103) d'un modèle de contour au moyen d'une reconnaissance de caractéristiques, laquelle représente une structure en grille du récipient de transport (400), en utilisant les données d'image;
• détermination (105) d'une grandeur d'écart, laquelle, en tant qu'écart de modèle, représente un écart d'occupation de surface, un écart de contraste et/ou un écart de tracé de contour du modèle de contour par rapport à au moins un modèle de référence, l'au moins un modèle de référence représentant un récipient de transport (400) vide ;
• détermination d'informations de profondeur sur la base des données d'image ; la grandeur d'écart représentant en outre un écart des informations de profondeur par rapport à des informations de profondeur de référence, les informations de profondeur de référence représentant un récipient de transport (400) vide ;
• délivrance en sortie (107) d'un signal lorsque la grandeur d'écart satisfait à un critère prédéfini.

2. Procédé (100) selon la revendication 1, comprenant en outre :
• capture de données d'image d'une zone supplémentaire du récipient de transport (400) ;
• détermination d'un modèle de contour supplémentaire, lequel représente la zone supplémentaire, sur la base des données d'image ;
• un modèle de référence de l'au moins un modèle de référence présentant le modèle de contour supplémentaire.

3. Procédé (100) selon la revendication 1 ou 2,
• le récipient de transport (400) étant disposé dans une zone de capture d'image en vue de la capture (101) des données d'image, la zone de capture d'image définissant un arrière-plan d'image du récipient de transport (400) ; et
• un modèle de référence de l'au moins un modèle de référence présentant un modèle de contour qui représente l'arrière-plan d'image.

4. Procédé (100) selon l'une des revendications 1 à 3, le critère prédéfini représentant un récipient de transport (400) vide et le signal présentant un signal de reconnaissance de l'état vide.

5. Procédé (100) selon l'une des revendications 1 à 4, la délivrance en sortie du signal présentant la délivrance en sortie d'une invite de commande, et
un processus de système de caisse passant à un état d'attente jusqu'à ce qu'une saisie soit effectuée en réponse à l'invite de commande.

6. Procédé (100) selon l'une des revendications 1 à 5, comprenant en outre :
détermination d'informations de couleur sur la base des données d'image ;
la grandeur d'écart représentant en outre un écart des informations de couleur par rapport à des informations de couleur de référence, les informations de couleur de référence représentant un récipient de transport (400) vide.

7. Procédé (100) selon l'une des revendications 1 à 6, comprenant en outre :
détermination d'informations topographiques sur la base des données d'image ;
la grandeur d'écart représentant en outre un écart des informations topographiques par rapport à des informations topographiques de référence, les informations topographiques de référence représentant un récipient de transport (400) vide.

8. Procédé (100) selon l'une des revendications 1 à 7, la délivrance en sortie du signal présentant la délivrance en sortie d'une invite de commande, le procédé comprenant en outre :
mise à jour de l'au moins un modèle de référence sur la base du modèle de contour lorsque la saisie en réponse à l'invite de commande représente un état vide du récipient de transport.

9. Procédé (100) selon l'une des revendications 1 à 8, la détermination des informations de profondeur comprenant la capture (101) d'informations d'image d'une zone supplémentaire du récipient de transport (400) à travers la zone.

10. Procédé (100) selon l'une des revendications 1 à 9, le modèle de contour représentant au moins l'un des éléments suivants :
• une perturbation, laquelle est provoquée par un objet lorsque l'objet est disposé dans le récipient de transport (400) ; et/ou
• un arrière-plan d'image, lequel est défini par une zone de capture d'image dans laquelle s'effectue la capture (101) des données d'image.

11. Dispositif pour la reconnaissance assistée par ordinateur de l'état vide d'un récipient de transport (400), le dispositif possédant :
système de capture d'image optique (202) destiné à capturer des données d'image ;
une mémoire de données (204) destinée à stocker au moins un modèle de référence et/ou dans laquelle est stocké au moins un modèle de référence, le modèle de référence représentant un récipient de transport (400) vide ;
un processeur (206), lequel est conçu pour mettre en œuvre le procédé suivant (100) :
• capture (101) de données d'image d'un récipient de transport (400) au moyen du système de capture d'image ;
• détermination (103) d'un modèle de contour au moyen d'une reconnaissance de caractéristiques, laquelle représente une structure en grille du récipient de transport (400), en utilisant les données d'image;
• détermination (105) d'une grandeur d'écart, laquelle, en tant qu'écart de modèle, représente un écart d'occupation de surface, un écart de contraste et/ou un écart de tracé de contour du modèle de contour par rapport à au moins un modèle de référence, l'au moins un modèle de référence représentant un récipient de transport (400) vide;
• détermination d'informations de profondeur sur la base des données d'image ; la grandeur d'écart représentant en outre un écart des informations de profondeur par rapport à des informations de profondeur de référence, les informations de profondeur de référence représentant un récipient de transport (400) vide ; et
• délivrance en sortie (107) d'un signal lorsque la grandeur d'écart satisfait à un critère prédéfini.
